# EUROPÄISCHE PATENTSCHRIFT

(11) **EP 2 934 787 B1**
(45) Veröffentlichungstag und Bekanntmachung des Hinweises auf die Patenterteilung: **31.08.2022**
(21) Anmeldenummer: 13830177.5
(22) Anmeldetag: 20.12.2013
(51) Int. Cl.: B22C 1/18

(54) **FORMSTOFFMISCHUNGEN ENTHALTEND ALUMINIUMOXIDE UND/ODER ALUMINIUM/SILIZIUM-MISCHOXIDE IN PARTIKULÄRER FORM**
MOLDING MIXTURES CONTAINING ALUMINUM OXIDES AND / OR ALUMINUM/SILICON MIXED OXIDES IN PARTICULATE FORM
MÉLANGES À MOULER CONTENANT DES OXYDES D'ALUMINIUM ET/OU OXYDES MIXTES ALUMINIUM/SILICIUM SOUS FORME PARTICULAIRE

(30) Priorität: 22.12.2012 DE 102012113073
(43) Veröffentlichungstag der Anmeldung: 28.10.2015
(73) Patentinhaber: ASK Chemicals GmbH, 40721 Hilden (DE)
(72) Erfinder: DETERS, Heinz, 40239 Düsseldorf (DE); ZUPAN, Henning, 42289 Wuppertal (DE); OBERLEITER, Martin, 40229 Düsseldorf (DE)
(74) Vertreter: Müller Schupfner & Partner Patent- und Rechtsanwaltspartnerschaft mbB
(86) Internationale Anmeldenummer: PCT/DE2013/000813
(87) Internationale Veröffentlichungsnummer: WO 2014/094721

(56) Entgegenhaltungen:
- WO-A1-2013/159762

## Beschreibung

Die Erfindung betrifft Formstoffmischungen enthaltend zumindest ein Aluminiumoxid in der alpha-Phase und/oder zumindest ein Aluminium/Silizium-Mischoxid, ausgenommen Aluminium/Silizium-Mischoxide mit Schichtsilikat-Struktur, als partikuläres Metalloxid, in Kombination mit feuerfesten Formgrundstoffen und Wasserglas als Bindemittel. Die partikulären Metalloxide zeigen bei Raumtemperatur keine oder nur eine sehr geringe Reaktionsfreudigkeit mit alkalischem Wasserglas. Die Formstoffmischungen werden zur Herstellung von Formen und Kernen für die Gießereiindustrie eingesetzt.

### Stand der Technik

Gießformen setzen sich im Wesentlichen aus Kernen und Formen zusammen, welche die Negativformen des herzustellenden Gussstücks darstellen. Diese Kerne und Formen bestehen dabei aus einem feuerfesten Material, beispielsweise Quarzsand, und einem geeigneten Bindemittel, das der Gießform nach der Entnahme aus dem Formwerkzeug eine ausreichende mechanische Festigkeit verleiht. Für die Herstellung von Gießformen verwendet man also einen feuerfesten Formgrundstoff, welcher mit einem geeigneten Bindemittel umhüllt ist. Der feuerfeste Formgrundstoff liegt bevorzugt in einer rieselfähigen Form vor, so dass er in eine geeignete Hohlform eingefüllt und dort verdichtet werden kann. Durch das Bindemittel wird ein fester Zusammenhalt zwischen den Partikeln des Formgrundstoffs erzeugt, so dass die Gießform die erforderliche mechanische Stabilität erhält.

Gießformen müssen verschiedene Anforderungen erfüllen. Beim Gießvorgang selbst müssen sie zunächst eine ausreichende Festigkeit und Temperaturbeständigkeit aufweisen, um das flüssige Metall in den aus einem oder mehreren Gieß(teil)formen gebildeten Hohlraum aufnehmen zu können. Nach Beginn des Erstarrungsvorgangs wird die mechanische Stabilität des Gussstücks durch eine erstarrte Metallschicht gewährleistet, die sich entlang der Wände der Gießform ausbildet. Das Material der Gießform muss sich nun unter dem Einfluss der vom Metall abgegebenen Hitze in der Weise zersetzen, dass es seine mechanische Festigkeit verliert, also der Zusammenhalt zwischen einzelnen Partikeln des feuerfesten Materials aufgehoben wird. Im Idealfall zerfällt die Gießform wieder zu einem feinen Sand, der sich mühelos vom Gussstück entfernen lässt.

In neuerer Zeit wird darüber hinaus immer häufiger gefordert, dass während der Herstellung der Gießformen sowie während der Herstellung des Gießens und Abkühlens möglichst keine Emissionen in Form von CO₂ oder Kohlenwasserstoffen entstehen, um die Umwelt zu schonen und die Geruchsbelästigung der Umgebung durch Kohlenwasserstoffe (hauptsächlich aromatisch) einzuschränken. Um diesen neueren Anforderungen zu genügen, wurden in den vergangenen Jahren anorganische Bindesysteme entwickelt bzw. weiterentwickelt, deren Verwendung dazu führt, dass Emissionen von CO₂ und Kohlenwasserstoffen bei der Herstellung von Metallformen vermieden oder zumindest deutlich minimiert werden können. Allerdings ist die Verwendung von anorganischen Bindesystemen häufig mit anderen Nachteilen verbunden, die im Einzelnen in den nachfolgenden Ausführungen beschrieben werden.

Anorganische Bindemittel haben im Vergleich zu organischen Bindemitteln den Nachteil, dass die daraus hergestellten Gießformen relativ geringe Festigkeiten aufweisen. Dies tritt besonders deutlich unmittelbar nach der Entnahme der Gießform aus dem Werkzeug zutage. Gute Festigkeiten zu diesem Zeitpunkt sind aber besonders wichtig für die Produktion komplizierter und/oder dünnwandiger Formteile und deren sichere Handhabung. Auch die Beständigkeit gegen Luftfeuchte ist gegenüber organischen Bindemitteln deutlich reduziert.

Die DE 102004042535 A1 (US 7770629 B2) offenbart, dass sich höhere Sofortfestigkeiten und höhere Beständigkeit gegen Luftfeuchte durch die Verwendung eines feuerfesten Formgrundstoffs, eines auf Wasserglas basierten Bindemittels sowie eines Anteils eines teilchenförmigen Metalloxids, welches ausgewählt ist aus der Gruppe von Siliziumdioxid, Aluminiumoxid, Titanoxid und Zinkoxid, realisieren lassen. Näher ausgeführt ist die Verwendung von teilchenförmigem amorphen Siliziumdioxid.

Anorganische Bindemittelsysteme haben gegenüber organischen Bindemittelsystemen weiterhin den Nachteil, dass daraus hergestellte Gießformen oft zu starken Sandanhaftungen und Penetrationen am Gussstück führen, was mit einem erheblichen Reinigungsaufwand und somit Mehrkosten für die Gießereien verbunden ist.

Auch das Entkernverhalten, d.h. der Fähigkeit der Gießform, nach dem Metallguss schnell (unter mechanischer Belastung) in eine leicht schüttfähige Form zu zerfallen, ist bei rein anorganisch hergestellten Gießformen (z.B. solche die Wasserglas als Bindemittel verwenden) häufig schlechter als bei Gießformen, die mit einem organischen Bindemittel hergestellt wurden. Diese letztgenannte Eigenschaft, ein schlechteres Entkernverhalten, ist besonders dann nachteilig, wenn dünnwandige bzw. filigrane oder komplexe Gießformen verwendet werden, welche sich nach dem Abguss prinzipiell schwer entfernen lassen. Als Beispiel können hier sogenannte Wassermantelkerne angebracht werden, die bei der Herstellung von gewissen Bereichen eines Verbrennungsmotors nötig sind.

Weiterhin ist bekannt, der Formstoffmischung organische Komponenten zuzugeben, die unter dem Einfluss des heißen Metalls pyrolysieren/reagieren und dadurch, einerseits, den Zerfall der Gießform nach dem Guss durch Porenbildung erleichtern und, andererseits, zu verbesserten Gussoberflächen führen können. Allerdings führt die Verwendung von organischen Komponenten in Formstoffmischungen während des Abgusses zu Emissionen von CO₂ und anderen Pyrolyseprodukten.

Die US 3203057 offenbart Formstoffmischungen bestehend aus einem feinen Feuerfestmaterial, einem flüssigen Bindemittel, wobei dieses im Besonderen eine Alkali-Silikat Lösung ist, sowie einem Al₂O₃ haltigen Wirkstoff, der das Entkernverhalten der Gießform nach dem Metallguss verbessert. Unter Al₂O₃ haltigen Wirkstoffen werden reines Aluminiumoxid, bekannte Mischoxide wie Aluminosilikate, Tonmineralien wie z.B. Bentonit oder Montmorillonit, natürlich vorkommende Al₂O₃ haltige Wirkstoffe wie Bauxit sowie andere Mineralien wie Cement und Kaolin verstanden. Die Al₂O₃-haltigen Wirkstoffe werden hier nur sehr allgemein beschrieben und es finden sich keine genauen Angaben, welche dieser Stoffe sich besonders gut für die Entkernbarkeit der Gießform, die Verarbeitungszeit der Formstoffmischung, die Gussoberflächengüte des betreffenden Gussstücks eignen.

Die US 4233076 offenbart Formstoffmischungen bestehend aus Sand, einem Alkalisilikat-Binder, mindestens einem Härter, welcher ausgewählt ist aus der Gruppe von Alkylencarbonat, einer organischen Monocarbon- oder Dicarbonsäure bzw. deren Methylester, Kohlendioxid oder Hochofenschlacke, sowie einem Al₂O₃ haltigen Stoff, dessen durchschnittliche Korngrößenverteilung zwischen 0,2 und 5 µm liegt.

Es wird beschrieben, dass der aluminiumoxidhaltige Feststoff vorzugsweise eine BET-Oberfläche zwischen 3 und 40 m²/g aufweist. Als bevorzugt wird Al₂O₃.3H₂O offenbart.

Die JP 4920794 B1 offenbart Formstoffmischungen bestehend aus einem Gießereisand, einem Alkalisilikat-Binder und amorphen Sphäroiden, die durch saures, kugelförmiges Siliziumdioxid und saures, kugelförmiges Aluminiumoxid gestaltet sind. Diese amorphen Sphäroide sollen als sogenannte "Superplasticizer" dienen und die Aushärtung unterstützen, was schließlich zu höheren Festigkeiten führt.

### Probleme des Standes der Technik und Aufgabenstellung

Die bisher bekannten anorganischen Bindemittelsysteme für Gießereizwecke weisen noch Raum für Verbesserungen auf. Vor allem ist es wünschenswert, ein anorganisches Bindemittelsystem zu entwickeln, welches:
(a) keine oder zumindest eine deutlich reduzierte Menge an Emissionen von CO₂ und organischen Pyrolyseprodukten, gasförmig und/oder aerosolförmig, z.B. aromatischen Kohlenwasserstoffen, während des Metallgießens entstehen lässt,
(b) ein entsprechendes Festigkeitsniveau erreicht, welches im automatisierten Fertigungsprozess nötig ist, insbesondere eine ausreichende Heißfestigkeit und Festigkeit nach Lagerung,
(c) eine sehr gute Oberflächengüte des betreffenden Gussstücks (auch ohne den Einsatz von Feuerfestbeschichtungen) ermöglicht, so dass keine oder zumindest nur eine geringe Nachbearbeitung notwendig ist,
(d) zu einer guten Zerfallseigenschaft der Gießform nach dem Metallguss führt, so dass das betreffende Gussstück leicht und rückstandsfrei von der Gießform getrennt werden kann,
(e) im Falle der Heißaushärtung und/oder CO₂-Aushärtung eine möglichst lange Verarbeitungszeit der damit hergestellten Formstoffmischung ermöglicht, und
(f) mit einem Formgrundstoff eine gute fließfähige Formstoffmischung ergibt, sodass auch Gießformen mit komplexer Geometrie ermöglicht werden können.

Der Erfindung lag daher die Aufgabe zugrunde, eine Formstoffmischung zur Herstellung von Gießformen für die Metallverarbeitung zur Verfügung zu stellen, welche den oben beschriebenen Anforderungen (a)-(f) entspricht.

Insbesondere zeichnet sich die erfindungsgemäße Formstoffmischung dadurch aus, dass sie die Gussoberfläche des betreffenden Gussstücks verbessert, ohne auf die Zugabe von organischen Additiven angewiesen zu sein. Diese Beobachtung kann insbesondere im Eisen- und Stahlguss, aber auch im Leichtmetall- und Nichteisenmetallguss gemacht werden.

### Zusammenfassung der Erfindung

Die oben beschriebenen Anforderungen werden mit einer Formstoffmischung mit den Merkmalen der unabhängigen Patentansprüche gelöst. Vorteilhafte Weiterbildungen der erfindungsgemäßen Formstoffmischung sind Gegenstand der abhängigen Patentansprüche oder nachfolgend beschrieben.

Die erfindungsgemäße Formstoffmischung zur Herstellung von Gießformen für die Metallverarbeitung umfasst mindestens:
a) einen feuerfesten Formgrundstoff;
b) ein anorganisches Bindemittel und
c) zumindest ein partikuläres Metalloxid, wobei das partikuläre Metalloxid
   - zumindest ein Aluminiumoxid in der alpha-Phase und/oder
   - zumindest ein Aluminium/Silizium-Mischoxid, ausgenommen Aluminium/Silizium-Mischoxide mit Schichtsilikat-Struktur, umfasst oder daraus besteht.

Überraschend wurde gefunden, dass durch den Zusatz von partikulären Oxiden des Aluminiums und des Zirkoniums, insbesondere neben amorphem partikulären Siliziumdioxid, zur Formstoffmischung Gießformen auf der Basis anorganischer Bindemittel hergestellt werden können, die eine hohe Festigkeit sowohl unmittelbar nach der Herstellung als auch bei längerer Lagerung aufweisen. Ein besonderer Vorteil liegt darin, dass nach dem Metallguss ein Gussstück, insbesondere aus Eisen oder Stahl mit sehr hoher Oberflächenqualität erhalten wird, sodass nach der Entfernung der Gießform nur eine geringe oder sogar gar keine Nachbearbeitung der Oberfläche des Gussstücks erforderlich ist.

Die Oberflächengüte des betreffenden Gussstücks, insbesondere aus Eisen oder Stahl, ist unter Verwendung der erfindungsgemäßen Formstoffmischung sogar teilweise vergleichbar mit solchen Oberflächen, die sich mithilfe organisch gebundener und mit einer Feuerfestschicht beschichteter Gießformen realisieren lassen. Eine Feuerfestbeschichtung lässt sich mit sogenannten Schlichten erzielen, die nach der Gießformherstellung auf eben solche aufgetragen werden müssen. Der Vorteil der erfindungsgemäßen Formstoffmischung besteht also auch darin, dass dieser Beschichtungsprozess zumindest entfallen kann, was mit erheblichen Kosteneinsparungen für die jeweiligen Gießereien verbunden ist.

Bevorzugt enthält die Formstoffmischung keine organischen Komponenten, sodass keine Emissionen von CO₂ und anderen Pyrolyseprodukten entstehen. Aus diesem Grund kann die Belastung, insbesondere am Arbeitsplatz, durch gesundheitsschädliche Emissionen eingeschränkt werden.

Auch stellt die Verwendung der erfindungsgemäßen Formstoffmischung einen Beitrag zur Reduzierung von klimaschädlichen Emissionen (durch CO₂ und andere, organische Pyrolyseprodukte) dar.

Das partikuläre Metalloxid zeigt bei Raumtemperatur keine bzw. zumindest aber eine sehr geringe Reaktionsfreudigkeit mit dem anorganischen Bindemittel, insbesondere dem alkalischen Wasserglas, auf.

### Detaillierte Beschreibung der Erfindung

Als feuerfester Formgrundstoff können für die Herstellung von Gießformen übliche Materialien verwendet werden. Geeignet sind beispielsweise Quarz- oder Chromerzsand, Olivin, Vermiculit, Bauxit und Schamotte, insbesondere mehr als 50 Gew.% Quarzsand bezogen auf den feuerfesten Formgrundstoff. Dabei ist es nicht notwendig, ausschließlich Neusande einzusetzen. Im Sinne einer Ressourcenschonung und zur Vermeidung von Deponiekosten ist es sogar vorteilhaft, einen möglichst hohen Anteil an regeneriertem Altsand zu verwenden. Der feuerfeste Formgrundstoff macht vorzugsweise größer 80 Gew.%, insbesondere größer 90 Gew.% der Formstoffmischung aus.

Ein geeigneter regenerierter Sand wird z.B. in der WO 2008/101668 (= US 2010/173767 A1) beschrieben. Gleichfalls geeignet sind Regenerate, die durch Waschen und anschließende Trocknung erhalten werden. Einsetzbar, aber weniger bevorzugt sind durch rein mechanische Behandlung gewonnene Regenerate. In der Regel können die Regenerate mindestens ca. 70 Gew.% des Neusands (der feuerfesten Formgrundstoffe) ersetzen, bevorzugt mindestens ca. 80 Gew.% und besonders bevorzugt mindestens ca. 90 Gew.%.

Bevorzugt sind Regenerate des feuerfesten Formgrundstoffs die zur Regeneration auf eine Temperatur von mindestens 200°C erhitzt wurden und insbesondere während dieser thermischen Behandlung bewegt wurden.

Weiter können als feuerfeste Formgrundstoffe auch künstliche Formstoffe verwendet werden wie z.B. Glasperlen, Glasgranulat, die unter der Bezeichnung "Cerabeads" bzw. "Carboaccucast" bekannten kugelförmigen keramischen Formgrundstoffe oder Aluminiumsilikatmikrohohlkugeln (sog. Microspheres). Solche Aluminiumsilikatmikrohohlkugeln werden beispielsweise von der Omega Minerals Germany GmbH, Norderstedt, in verschiedenen Qualitäten mit unterschiedlichen Gehalten an Aluminiumoxid unter der Bezeichnung "Omega-Spheres" in den Handel gebracht. Entsprechende Produkte sind bei der PQ Corporation (USA) unter der Bezeichnung "Extendospheres" erhältlich.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die mittlere Partikelgröße lässt sich z.B. durch Siebung nach DIN 66165 (Teil 2) mit Analysensieben nach DIN ISO 3310-1 bestimmen. Besonders bevorzugt sind Teilchenformen mit größter Längenausdehnung zu kleinster Längenausdehnung (in beliebigen Raumrichtungen) von 1:1 bis 1:5 oder 1:1 bis 1:3, d.h. solche die z.B. nicht faserförmig sind.

In Gießversuchen, insbesondere mit Aluminium, wurde gefunden, dass künstliche Formgrundstoffe, vor allem Glasperlen, Glasgranulat bzw. Microspheren, zur Erzeugung glatterer Gussoberflächen beitragen können. Es ist dabei nicht notwendig, den gesamten Formgrundstoff aus den künstlichen Formgrundstoffen zu bilden. Der bevorzugte Anteil der künstlichen Formgrundstoffe liegt bei mindestens etwa 3 Gew.%, besonders bevorzugt mindestens 5 Gew.%, insbesondere bevorzugt mindestens 10 Gew.%, vorzugsweise bei mindestens etwa 15 Gew.-%, besonders bevorzugt bei mindestens etwa 20 Gew.%, bezogen auf die gesamte Menge des feuerfesten Formgrundstoffes.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Die Wassergläser als anorganisches Bindemittel enthalten gelöste Alkalisilikate und können durch Lösen von glasartigen Lithium-, Natrium- und/oder Kaliumsilikaten in Wasser hergestellt werden. Das Wasserglas weist vorzugsweise ein molares Modul SiO₂/M₂O im Bereich von 1,6 bis 4,0, insbesondere 2,0 bis kleiner 3,5, auf, wobei M für Lithium, Natrium oder Kalium steht. Die Bindemittel können auch auf Wassergläsern basieren, die mehr als eins der genannten Alkaliionen enthalten, wie z.B. die aus DE 2652421 A1 (= GB1532847 A) bekannten lithiummodifizierten Wassergläser. Weiterhin können die Wassergläser auch mehrwertige Ionen enthalten wie z.B. die in EP 2305603 A1 (= WO 2011/042132 A1) beschriebenen Al-modifizierten Wassergläser. Auch B-modifizierte Wassergläser sind möglich. Die Wassergläser weisen einen Feststoffanteil im Bereich von 25 bis 65 Gew.% auf, vorzugsweise von 30 bis 60 Gew.%. Der Feststoffanteil bezieht sich auf die im Wasserglas enthaltene Menge an SiO₂ und M₂O. Je nach Anwendung und gewünschtem Festigkeitsniveau werden zwischen 0,5 Gew.% und 5 Gew.% des auf Wasserglas basierenden Bindemittels eingesetzt, vorzugsweise zwischen 0,75 Gew.% und 4 Gew.%, besonders bevorzugt zwischen 1 Gew.% und 3,5 Gew.%, jeweils bezogen auf den Formgrundstoff. Die Angaben beziehen sich auf die Gesamtmenge des Wasserglasbinders, einschließlich des (insbesondere wässrigen) Lösungs- bzw. Verdünnungsmittels und des (etwaigen) Feststoffanteils (=100%).

Überraschend wurde gefunden, dass durch den Zusatz von obigen partikulären Metalloxiden zur Formstoffmischung Gießformen auf der Basis anorganischer Bindemittel hergestellt werden können, die nicht nur eine hohe Festigkeit sowohl unmittelbar nach der Herstellung als auch bei längerer Lagerung aufweisen, sondern auch zu einer guten Oberflächengüte des Gussstücks, insbesondere aus Eisen und Stahl, führen.

Unter partikulären Metalloxiden enthaltend zumindest ein Aluminiumoxid in der alpha-Phase und/oder zumindest ein Aluminium/Silizium-Mischoxid, ausgenommen Aluminium/Silizium-Mischoxide mit Schichtsilikat-Struktur, werden nicht nur partikuläre Metalloxide verstanden. die aus reinem Aluminiumoxid oder reinem Alumosilikaten oder Aluminosilikaten bestehen, sondern auch Gemische von obigen Metalloxiden mit anderen Oxiden beispielsweise des Zirkoniums, Zirkonium eingebaut in die Aluminium/Silizium-Mischoxide oder heterogene, d.h. aus mehreren Phasen bestehende Stoffgemische, die unter anderem aus mindestens zwei der nachgenannten Feststoffe bzw. Phasen bestehen: aluminiumoxidhaltige und/oder aluminium/siliziumoxidhaltige Feststoffe bzw. Phasen.

Bevorzugt ist das erfindungsgemäße, partikuläre Metalloxid ausgewählt aus der Gruppe von Korund plus Zirkoniumdioxid, Zirkonmullit, Zirkonkorund und Aluminiumsilikaten (ausgenommen solche mit Schichtsilikat-Struktur) plus Zirkoniumdioxid und enthält daneben ggf. weitere Metalloxide.

Das Aluminium/Silizium-Mischoxid ist weiterhin vorzugsweise ein Inselsilikat. Typische Vertreter dieser Inselsilikate sind (nach der *Systematik der Minerale nach Strunz*, 9. Auflage) beispielsweise Mullit (Schmelz- und Sintermullit sind hier ebenso gemeint wie ZrO₂-haltiges Mullit) und Sillimanit sowie andere Mitglieder der Sillimanit-Gruppe (beispielsweise Kyanit oder Andalusit), wobei aus der Sillimanit-Gruppe besonders bevorzugt Kyanit eingesetzt wird. Besonders bevorzugt wird ein amorphes Aluminiumsilikat (ausgenommen solche mit Schichtsilikat-Struktur) mit größer 50 Atom% Aluminium Atomen bezogen auf die Summe aller Silizium und Aluminium Atome sowie ein aluminiumoxidhaltiger Staub, welcher als Nebenprodukt bei der Zirkonkorund-Herstellung entsteht und weiter unten näher beschrieben wird.

Unter Aluminiumsilikaten werden im Sinne dieser Erfindung Alumosilikate und Aluminosilikate) verstanden.

Bei Inselsilikaten liegen die in der Struktur enthaltenen SiO₄-Einheiten (tetraedrisch) nicht direkt miteinander verknüpft vor (keine Si-O-Si Verknüpfungen), stattdessen finden sich Verknüpfungen der tetraedrischen SiO₄ Einheiten zu einem oder mehreren Al-Atomen (Si-O-Al). In der Struktur der hier beanspruchten Inselsilikate liegen die die AI-Atome in 4-, 5-, und/oder 6-fach Koordination von Sauerstoffatomen vor.

Nicht geeignet als Additive für das Bindemittel sind Aluminium/Silizium-Mischoxid mit Schichtstruktur, wie beispielsweise Metakaoline, Kaoline, Kaolinit. Weiterhin nicht geeignet ist pyrogenes, amorphes Aluminiumoxid.

Die Feinheit des erfindungsgemäßen partikulären Metalloxids lässt sich durch Siebung ermitteln. Typischerweise beträgt der Rückstand bei einem Durchgang durch ein Sieb mit 75 µm Maschenweite (200 mesh) nicht mehr als ca. 50 Gew.%, vorzugsweise nicht mehr als ca. 30 Gew.%, weiter bevorzugt nicht mehr als ca. 20 Gew.% und besonders bevorzugt nicht mehr als ca. 15 Gew.%.

Die Bestimmung des Siebrückstandes erfolgt durch Siebanalyse nach DIN 66165 (Teil 2) nach einem Maschinensiebverfahren, wobei nach einer Ausführungsform keine Siebhilfe und nach einer anderen Ausführungsform zusätzlich ein Kettenring als Siebhilfe verwendet wird.

Die Kornform der partikulären Metalloxide kann im Grunde jegliche Form aufweisen wie beispielsweise faserförmig, splittrig, kantenförmig, plättchenförmig, kantengerundet oder auch rund. Bevorzugt werden allerdings kantengerundete und runde Partikelformen. Besonders bevorzugt werden runde Partikelformen eingesetzt, wobei diese ellipsoid oder kugelförmig sein können - kugelförmige werden hierbei bevorzugt.

Das Verhältnis größter Längenausdehnung zu kleinster Längenausdehnung der jeweiligen Partikelformen (für alle Raumrichtungen) ist bevorzugt kleiner als 10:1, besonders bevorzugt kleiner 5:1 und insbesondere bevorzugt kleiner als 3:1. Da kugelförmige Partikelformen in besonderem Maße vorteilhaft sind, ist ein Verhältnis größter Längenausdehnung zu kleinster Längenausdehnung von 1,1:1 bis 1:1 ideal.

Die mit REM-Aufnahmen und unter grafischer Auswertung bestimmbare durchschnittliche Primärpartikelgröße der erfindungsgemäßen partikulären Metalloxide ist typischerweise größer als 0,01 µm und bevorzugt größer als 0,02 µm. Diese Partikelgröße ist außerdem typischerweise kleiner als 50 µm, vorzugsweise kleiner als 20 µm, besonders bevorzugt kleiner als 10 µm und insbesondere bevorzugt kleiner als 5 µm.

Des Weiteren wurde die durchschnittliche spezifische Oberfläche der partikulären Metalloxide mithilfe von Gasadsorptionsmessungen (BET-Verfahren) nach DIN 66131 bestimmt. Die spezifische Oberfläche dieses Stoffes ist typischerweise kleiner als 50 m²/g, bevorzugt kleiner als 30 m²/g, besonders bevorzugt kleiner als 17 m²/g. Die spezifische Oberfläche dieses Stoffes ist typischerweise größer als 0,1 m²/g, bevorzugt größer als 0,5 m²/g, besonders bevorzugt größer als 1 m²/g.

Das Zirkoniumdioxid kann in der tetragonalen oder der monoklinen Modifikation vorliegen.

Besonders bevorzugt, insbesondere für die Erzeugung glatter Gussoberflächen, wird ein partikuläres Metalloxid verwendet, das als Nebenprodukt bei der Zirkonkorund-Herstellung entsteht und im Nachfolgenden näher beschrieben wird. Die Hauptbestandteile dieses Staubs sind Al₂O₃, ZrO₂ und SiO₂, wobei diese Oxide in unterschiedlichen Modifikationen des reinen Oxids oder in Form von Mischoxiden vorliegen können.

Der Anteil an Aluminium berechnet als Al₂O₃ an dem partikulären Metalloxid, bzw. dem Staub, ist vorteilhafterweise größer als 25 Gew.%, vorzugsweise größer als 30 Gew.%, besonders bevorzugt größer als 35 Gew.% und insbesondere bevorzugt größer als 40 Gew.%. Der Anteil an Aluminium berechnet als Al₂O₃ an dem partikulären Metalloxid, bzw. dem Staub ist üblicherweise kleiner als 80 Gew.%, vorzugsweise kleiner als 70 Gew.%, besonders bevorzugt kleiner als 65 Gew.% und insbesondere bevorzugt kleiner als 60 Gew.%.

Der Anteil an Zirkonium berechnet als ZrO₂ an dem partikulären Metalloxid, bzw. dem Staub, ist, soweit vorhanden, vorteilhafterweise größer als 2 Gew.%, vorzugsweise größer als 4 Gew.%, besonders bevorzugt größer als 8 Gew.%. Der Anteil an Zirkonium berechnet als ZrO₂ an diesem Staub ist üblicherweise kleiner als 50 Gew.%, vorzugsweise kleiner als 40 Gew.% und besonders bevorzugt kleiner als 30 Gew.%.

Der Anteil des Siliziums (ausgenommen ist partikuläres amorphes Siliziumoxid), berechnet als SiO₂ an dem partikulären Metalloxid, bzw. dem Staub, ist wenn vorhanden vorteilhafterweise größer als 5 Gew.%, vorzugsweise größer als 15 Gew.%, besonders bevorzugt größer als 20 Gew.%. Der Anteil des Siliziums berechnet als SiO₂ an diesem Staub ist üblicherweise kleiner als 60 Gew.%, vorzugsweise kleiner als 50 Gew.% und besonders bevorzugt kleiner als 45 Gew.%.

Auch andere Oxide können als Verunreinigungen in dem partikulären Metalloxid, bzw. dem Staub, vorhanden sein wie beispielsweise Fe₂O₃, Na₂O, TiO₂, MgO und CaO. Der Anteil dieser Verunreinigungen ist nach einer Ausgestaltung üblicherweise kleiner als 12 Gew.%, vorzugsweise kleiner als 8 Gew.% und insbesondere bevorzugt kleiner als 4 Gew.%.

Das Aluminium kommt in mehreren Phasen in dem heterogenen Staub aus der als Zirkonkorund-Herstellung vor. Als kristalline Phase lässt sich mit Hilfe der Röntgenpulverdiffraktometrie eindeutig Korund (α-Al₂O₃) bestimmen. Solche Messungen können beispielsweise an einem Vollschutz-Diffraktometer der Firma PANalytical (X'pert PW3040) durchgeführt werden, das mit einem Primär-Monochromator und einem ortsempfindlichen Detektor ausgestattet ist. Geringe Mengen an kristallinem synthetischen Mullit (etwa Al_{2.4}Si_{0,6}O_{4,8}) können ebenfalls mit Hilfe dieser Methode gefunden werden.

Neben diesen mit der Röntgenpulverdiffraktometrie gefundenen Phasen deuten ²⁷Al Festkörper NMR Messungen darauf hin, dass weitere aluminiumhaltige Phasen vorhanden sind, welche - so vermuten die Erfinder - amorph sind. Solche Messungen lassen sich beispielsweise mit Hilfe eines BRUKER AVANCE DSX 500 Spektrometers (Magnetische Flussdichte von 11,74 Tesla) unter Zuhilfenahme der Magic-Angle-Spinning Technik (MAS, etwa 25 kHz) durchführen.

Mit rasterelektronenmikroskopischen Aufnahmen (REM-Aufnahmen mit z.B. Nova NanoSEM 230 der Firma FEI) konnten Details der Primärpartikelform bis in die Größenordnung von 0,01 µm sichtbar gemacht werden. Neben eckig bzw. splittrig vorliegenden Partikeln konnte eine Vielzahl kugelförmiger Partikel identifiziert werden, die einen geringen Grad an Agglomeration und/oder Verwachsungen miteinander aufwiesen.

Die mit REM-Aufnahmen bestimmbare (durch grafische Auswertung) durchschnittliche Primärpartikelgröße der kugelförmigen Partikel der partikulären Metalloxide kann zwischen 0,01 µm und 10 µm, insbesondere zwischen 0,02 µm und 5 µm, besonders bevorzugt zwischen 0,02 µm und 2 µm betragen. Durch die im Rasterelektronenmikroskop integrierte EDX-Einheit kann mittels energiedispersiver Röntgenanalyse die Elementarzusammensetzung der kugelförmigen Partikel bestimmt werden. Die Detektion der Sekundärelektronen erfolgte durch einen In-lens SE Detektor (TLD-SE). Die energiedispersive Röntgenanalyse wurde mit einem System der Firma EDAX durchgeführt). Im Zuge dieser Untersuchung konnte festgestellt werden, dass ein Großteil der kugelförmig vorliegenden Partikel aus Aluminiumsilikat besteht.

Die Erfinder vermuten, ohne an die Theorie gebunden sein zu wollen, dass diese kugelförmigen Aluminiumsilikat-Partikel amorph sind und dass das Vorhandensein solcher Partikel in der Formstoffmischung sich vorteilhaft auf die Verdichtung dieser sowie auf die Oberflächengüte des entsprechenden Gussstücks auswirkt. Dies ist sowohl beim Eisen- und Stahlguss, als auch beim Aluminiumguss zu beobachten, daher ist die Verwendung dieses aluminiumoxid- und zirkoniumoxid- haltigen Staubs aus der Zirkonkorund-Herstellung besonders bevorzugt

Das erfindungsgemäße Aluminiumoxid in der alpha-Phase und/oder das Aluminium/Silizium-Mischoxid, ausgenommen Aluminium/Silizium-Mischoxide mit Schichtsilikat-Struktur (ggf. in Summe) ist jeweils zwischen 0,05 Gew.% und 2,0 Gew.%, vorzugsweise zwischen 0,1 Gew.% und 2,0 Gew.%, besonders bevorzugt zwischen 0,1 Gew.% und 1,5 Gew.% und insbesondere bevorzugt zwischen 0,2 Gew.% und 1,2 Gew.% oder sogar zwischen 0,2 Gew.% und 0,8 Gew.%, in der Formstoffzusammensetzung enthalten, jeweils bezogen auf den Formgrundstoff, bzw. wird in obigen Anteilen der Formstoffzusammensetzung zugegeben. Werden das Aluminiumoxid in der alpha-Phase und/oder das Aluminium/Silizium-Mischoxid gemeinsam eingesetzt, gelten obige Grenzwerte für die Summe an erfindungsgemäßem Aluminiumoxid in der alpha-Phase und an erfindungsgemäßem Aluminium/Silizium-Mischoxid.

In einer weiteren, bevorzugten Ausführungsform kann der erfindungsgemäßen Formstoffmischung ein Anteil eines partikulären amorphen SiO₂ zugesetzt sein, um das Festigkeitsniveau der mit solchen Formstoffmischungen hergestellten Gießformen zu erhöhen. Eine Steigerung der Festigkeiten der Gießformen, insbesondere die Steigerung der Heißfestigkeiten, kann im automatisierten Fertigungsprozess vorteilhaft sein. Das teilchenförmige amorphe Siliziumdioxid hat eine Teilchengröße von vorzugsweise weniger als 300 µm, bevorzugt weniger als 200 µm, insbesondere bevorzugt weniger als 100 µm und weist z.B. eine mittlere Primärpartikelgröße zwischen 0,05 µm und 10 µm auf.

Die Teilchengröße lässt sich durch Siebanalyse bestimmen. Besonders bevorzugt beträgt der Siebrückstand auf einem Sieb mit einer Maschenweite von 63 µm weniger als 10 Gew.-%, vorzugsweise weniger als 8 Gew.%.

Die Bestimmung der Teilchengröße bzw. des Siebrückstandes erfolgt durch Siebanalyse nach DIN 66165 (Teil 2) nach einem Maschinensiebverfahren, wobei nach einer Ausführungsform keine Siebhilfe und nach einer anderen Ausführungsform zusätzlich ein Kettenring als Siebhilfe verwendet wird. Die Primärpartikelgröße wird durch dynamische Lichtstreuung bestimmt und kann durch REM geprüft werden.

Das partikuläre amorphe Siliziumdioxid kann zusammen mit dem partikulären Metalloxid hinzugegeben werden oder separat. In jedem Fall sind die hier gemachten Angaben zur Konzentration des partikulären Metalloxids und des partikulären amorphen Siliziumdioxids jeweils ohne die andere(n) Komponente(n) zu verstehen. Im Zweifel muss die Komponente herausgerechnet werden.

Das nach der vorliegenden Erfindung vorzugsweise eingesetzte amorphe SiO₂ hat einen Wassergehalt von kleiner 15 Gew.%, insbesondere kleiner 5 Gew.% und besonders bevorzugt von kleiner 1 Gew.%. Insbesondere wird das amorphe SiO₂ als Pulver eingesetzt.

Als amorphes SiO₂ kann sowohl synthetisch hergestellte als auch natürlich vorkommende Kieselsäuren eingesetzt werden. Letztere, bekannt z.B. aus DE 102007045649, sind aber nicht bevorzugt, da sie i.d.R. nicht unerhebliche kristalline Anteile enthalten und deshalb als karzinogen eingestuft sind.

Unter synthetisch wird nicht natürlich vorkommendes amorphes SiO₂ verstanden, d.h. dessen Herstellung umfasst eine chemische Reaktion, z.B. die Herstellung von Kieselsolen durch Ionenaustauschprozesse aus Alkalisilikatlösungen, die Ausfällung aus Alkalisilikatlösungen, die Flammhydrolyse von Siliziumtetrachlorid, die Reduktion von Quarzsand mit Koks im Lichtbogenofen bei der Herstellung von Ferrosilizium und Silizium. Das nach den beiden letztgenannten Verfahren hergestellte amorphe SiO₂ wird auch als pyrogenes SiO₂ bezeichnet. Gelegentlich wird unter synthetischem amorphem SiO₂ nur Fällungskieselsäure (CAS-Nr. 112926-00-8) und flammhydrolytisch hergestelltes SiO₂ (Pyrogenic Silica, Fumed Silica, CAS-Nr. 112945-52-5) verstanden, während das bei der Ferrosilizium- bzw. Siliziumherstellung entstandene Produkt lediglich als amorphes SiO₂ (Silica Fume, Microsilica, CAS-Nr. 69012-64-12) bezeichnet wird. Für die Zwecke der vorliegenden Erfindung wird auch das bei der Ferrosilizium- bzw. Siliziumherstellung entstandene Produkt als synthetisches amorphes SiO₂ verstanden.

Bevorzugt eingesetzt werden Fällungskieselsäuren und pyrogenes, d.h. flammhydrolytisch oder im Lichtbogen hergestelltes SiO₂. Insbesondere bevorzugt eingesetzt werden durch thermische Zersetzung von ZrSiO₄ hergestelltes amorphes SiO₂ (siehe DE 102012020509, der Anteil an Zirkonium wird als ZiO₂ dem partikulären Metalloxid zugeschlagen, der andere Anteil dem amorphen Silizuimdioxid) sowie durch Oxidation von metallischem Si mittels eines sauerstoffhaltigen Gases hergestelltes SiO₂ (siehe DE 102012020510). Bevorzugt ist auch Quarzglaspulver (hauptsächlich amorphes SiO₂), das durch Schmelzen und rasches Wiederabkühlen aus kristallinem Quarz hergestellt wurde, so dass die Partikel kugelförmig und nicht splittrig vorliegen (siehe DE 102012020511). Die durchschnittliche Primärpartikelgröße des synthetischen amorphen Siliziumdioxids kann zwischen 0,05 µm und 10 µm, insbesondere zwischen 0,1 µm und 5 µm, besonders bevorzugt zwischen 0,1 µm und 2 µm betragen. Die Primärpartikelgröße kann z.B. mit Hilfe von dynamischer Lichtstreuung (z.B. Horiba LA 950) bestimmt sowie durch Rasterelektronenmikroskop-Aufnahmen (REM-Aufnahmen mit z.B. Nova NanoSEM 230 der Firma FEI) überprüft werden. Des Weiteren konnten mit Hilfe der REM-Aufnahmen Details der Primärpartikel-form bis in die Größenordnung von 0,01 µm sichtbar gemacht werden. Die SiO₂-Proben wurden für die REM-Messungen in destilliertem Wasser dispergiert und anschließend auf einem mit Kupferband beklebten Aluminiumhalter aufgebracht, bevor das Wasser verdampft wurde.

Des Weiteren wurde die spezifische Oberfläche des synthetisch amorphen Siliziumdioxids mithilfe von Gasadsorptionsmessungen (BET-Verfahren) nach DIN 66131 bestimmt. Die spezifische Oberfläche des synthetisch amorphen SiO₂ liegt zwischen 1 und 200 m²/g, insbesondere zwischen 1 und 50 m²/g, besonders bevorzugt zwischen 1 und 30 m²/g. Ggfs. können die Produkte auch gemischt werden, z.B. um gezielt Mischungen mit bestimmten Partikelgrößenverteilungen zu erhalten.

Je nach Herstellungsart und Produzent kann die Reinheit des amorphen SiO₂ stark variieren. Als geeignet haben sich Typen mit einem Gehalt von mindestens 85 Gew.% SiO₂ erwiesen, bevorzugt von mindestens 90 Gew.% und besonders bevorzugt von mindestens 95 Gew.%.

Je nach Anwendung und gewünschtem Festigkeitsniveau werden zwischen 0,1 Gew.% und 2 Gew.% des teilchenförmigen amorphen SiO₂ eingesetzt, vorzugsweise zwischen 0,1 Gew.% und 1,8 Gew.%, besonders bevorzugt zwischen 0,1 Gew.% und 1,5 Gew.%, jeweils bezogen auf den Formgrundstoff.

Das Verhältnis von Wasserglasbinder zu partikulärem Metalloxid und soweit vorhanden amorphem SiO₂ kann innerhalb weiter Grenzen variiert werden. Dies bietet den Vorteil, die Anfangsfestigkeiten der Kerne, d.h. die Festigkeit unmittelbar nach der Entnahme aus dem Werkzeug, stark zu verbessern, ohne die Endfestigkeiten wesentlich zu beeinflussen.

Dies ist vor allem im Leichtmetallguss von großem Interesse. Auf der einen Seite sind hohe Anfangsfestigkeiten erwünscht, um die Kerne nach ihrer Herstellung problemlos transportieren oder zu ganzen Kernpaketen zusammensetzen zu können, auf der anderen Seite sollten die Endfestigkeiten nicht zu hoch sein, um Schwierigkeiten beim Kernzerfall nach dem Abguss zu vermeiden, d.h. der Formgrundstoff sollte nach dem Gießen problemlos aus Hohlräumen der Gussform entfernt werden können.

Bezogen auf das Gewicht des Bindemittels (einschließlich Verdünnungs- bzw. Lösungsmittel) ist das amorphe SiO₂ vorzugsweise in einem Anteil von 2 bis 60 Gew.% enthalten, besonders bevorzugt von 3 bis 55 Gew.% und insbesondere bevorzugt zwischen 4 bis 50 Gew.%, bzw. besonders bevorzugt bezogen auf das Verhältnis Feststoffanteil des Wasserglases zu amorphem SiO₂ von 10 : 1 bis 1 : 1,2 (Gewichtsteile).

Die Zugabe des amorphen SiO₂ kann gemäß EP 1802409 B1 sowohl vor als auch nach der Binderzugabe direkt zum Feuerfeststoff erfolgen, es kann aber auch, wie in EP 1884300 A1 (= US 2008/029240 A1) beschrieben, zuerst eine Vormischung des SiO₂ mit zumindest einem Teil des Binders oder Natronlauge hergestellt und diese dann dem Feuerfeststoff zugemischt werden. Der ggf. noch vorhandene, nicht für die Vormischung verwendete Binder bzw. Binderanteil kann dem Feuerfeststoff vor oder nach der Zugabe der Vormischung oder zusammen mit dieser zugegeben werden. Vorzugsweise ist das amorphe SiO₂ dem Feuerfeststoff vor der Binderzugabe zugegeben.

In einer weiteren Ausführungsform kann der Formstoffmischung Bariumsulfat zugesetzt sein (DE 102012104934), um die Oberfläche des Gussstücks weiter zu verbessern. Das Bariumsulfat kann synthetisch hergestelltes als auch natürliches Bariumsulfat sein, d.h. in Form von Mineralien hinzugefügt sein, die Bariumsulfat enthalten, wie Schwerspat bzw. Baryt. Synthetisch hergestelltes Bariumsulfat (auch Blanc Fixe genannt) wird beispielsweise mithilfe einer Fällungsreaktion hergestellt.

Zu diesem Zweck werden meist leicht lösliche Bariumverbindungen (Bariumsalze) in Wasser gelöst. Anschließend wird durch Zugabe von leicht löslichen Sulfat-Salzen (wie z.B. Natriumsulfat) oder auch Schwefelsäure das schwerlösliche Bariumsulfat gefällt. Das gefällte Bariumsulfat wird abfiltriert, getrocknet und evtl. gemahlen.

Natürliches Bariumsulfat wird als Roherz gewonnen und anschließend durch verschiedene Methoden aufgearbeitet (z.B. Dichtesortierung, Vermahlung usw.). Bevorzugt hat das Bariumsulfat eine Reinheit von mehr als 85 Gew.%, besonders bevorzugt von mehr als 90 Gew.%. Das natürlich gewonnene Bariumsulfat kann beispielsweise eine Verunreinigung von Calciumfluorid enthalten. Der Anteil des Calciumfluorids kann typischerweise bei etwa 5% bezogen auf das Gesamtgewicht des natürlichen Bariumsulfats liegen.

Die durchschnittliche Teilchengröße des erfindungsgemäß einzusetzenden Bariumsulfats liegt vorzugsweise zwischen 0,1 µm und 90 µm. Die Partikelgrößenverteilung lässt sich beispielsweise mit Hilfe von dynamischer Lichtstreuung (z.B. Horiba LA 950) bestimmen.

Bevorzugt beträgt der Siebrückstand auf einem Sieb mit der Maschenweite von 45 µm weniger als 20 Gew.%, besonders bevorzugt weniger als 10 Gew.%, insbesondere bevorzugt weniger als 5 Gew.%. Die Bestimmung des Siebrückstands erfolgt durch Siebanalyse nach DIN 66165 (Teil 2) nach einem Maschinensiebverfahren, wobei nach einer Ausführungsform keine Siebhilfe und nach einer anderen Ausführungsform zusätzlich ein Kettenring als Siebhilfe verwendet wird.

Das Bariumsulfat wird bevorzugt in einer Menge von 0,02 bis 5,0 Gew.%, besonders bevorzugt 0,05 bis 3,0 Gew.%, insbesondere bevorzugt 0,1 bis 2,0 Gew.% oder 0,3 bis 0,99 Gew.%, jeweils bezogen die gesamte Formstoffmischung, zugegeben.

Gemäß einer weiteren Ausführungsform können der erfindungsgemäßen Formstoffmischung auch andere Stoffe zugesetzt werden, die sich durch eine geringe Benetzung mit geschmolzenem Aluminium auszeichnen, wie z.B. Bornitrid.

Eine solche Mischung von wenig benetzenden Stoffen, die u. a. Bariumsulfat als wenig benetzendes Mittel enthält, kann ebenfalls zu einer glatten, sandanhaftungsfreien Gussoberfläche führen. Bezogen auf die Gesamtmenge nicht/wenig benetzender Stoffe sollte der Anteil des Bariumsulfats größer als 5 Gew%, bevorzugt größer als 10 Gew%, insbesondere bevorzugt größer als 20 Gew% oder größer 60 Gew.% sein. Die Obergrenze stellt reines Bariumsulfat dar - der Anteil des Bariumsulfats an nichtbenetzenden Mitteln ist in diesem Fall 100 Gew%. Die Mischung nicht/wenig benetzender Stoffe wird bevorzugt in einer Menge von 0,02 bis 5,0 Gew.%, besonders bevorzugt 0,05 bis 3,0 Gew.%, insbesondere bevorzugt 0,1 bis 2,0 Gew.% oder 0,3 bis 0,99 Gew.%, jeweils bezogen auf die Formstoffmischung, zugegeben.

In einer weiteren Ausführungsform kann die erfindungsgemäße Formstoffmischung eine phosphorhaltige Verbindung umfassen. Dieser Zusatz ist bei sehr dünnwandigen Abschnitten einer Gießform bevorzugt. Es handelt sich dabei bevorzugt um anorganische Phosphorverbindungen, in denen der Phosphor bevorzugt in der Oxidationsstufe +5 vorliegt. Durch den Zusatz phosphorhaltiger Verbindungen kann die Stabilität der Gießform weiter gesteigert werden. Dies ist insbesondere von Bedeutung, wenn beim Metallguss das flüssige Metall auf eine schräge Fläche trifft und dort wegen des hohen metallostatischen Drucks eine hohe Erosionswirkung ausübt bzw. zu Verformungen insbesondere dünnwandiger Abschnitte der Gießform führen kann.

Die phosphorhaltige Verbindung liegt bevorzugt in Form eines Phosphats oder Phosphoroxids vor. Das Phosphat kann dabei als Alkali- bzw. als Erdalkalimetallphosphat vorliegen, wobei Alkalimetallphosphate und hierbei insbesondere die Natriumsalze besonders bevorzugt sind.

Prinzipiell können auch Ammoniumphosphate oder Phosphate anderer Metallionen verwendet werden. Die als bevorzugt genannten Alkali- bzw. Erdalkalimetallphosphate sind allerdings leicht zugänglich und in an sich beliebigen Mengen kostengünstig verfügbar.

Phosphate mehrwertiger Metallionen, insbesondere dreiwertiger Metallionen, sind nicht bevorzugt. Es wurde beobachtet, dass sich bei Verwendung derartiger Phosphate mehrwertiger Metallionen, insbesondere dreiwertiger Metallionen, die Verarbeitungszeit der Formstoffmischung verkürzt. Wird die phosphorhaltige Verbindung der Formstoffmischung in Form eines Phosphoroxids zugesetzt, liegt das Phosphoroxid bevorzugt in Form von Phosphorpentoxid vor. Es können jedoch auch Phosphortri- und Phosphortetroxid Verwendung finden.

Als Phosphate können sowohl Orthophosphate als auch Polyphosphate, Pyrophosphate oder Metaphosphate eingesetzt werden. Die Phosphate können beispielsweise durch Neutralisation der entsprechenden Säuren mit einer entsprechenden Base, beispielsweise einer Alkalimetallbase, wie NaOH, oder ggf. auch einer Erdalkalimetallbase hergestellt werden, wobei nicht notwendigerweise alle negativen Ladungen des Phophats durch Metallionen abgesättigt sein müssen.

Es können sowohl die Metallphosphate als auch die Metallhydrogenphosphate sowie die Metalldihydrogenphosphate eingesetzt werden, wie beispielsweise Na₃PO₄, Na₂HPO₄, und NaH₂PO₄. Ebenso können die wasserfreien Phosphate wie auch Hydrate der Phosphate eingesetzt werden. Die Phosphate können sowohl in kristalliner als auch in amorpher Form in die Formstoffmischung eingebracht sein.

Unter Polyphosphaten werden insbesondere lineare Phosphate verstanden, die mehr als ein Phosphoratom umfassen, wobei die Phosphoratome jeweils über Sauerstoffbrücken miteinander verbunden sind. Polyphosphate werden durch Kondensation von Orthophosphationen unter Wasserabspaltung erhalten, sodass eine lineare Kette von PO₄-Tetraedern erhalten wird, die jeweils über Ecken verbunden sind. Polyphosphate weisen die allgemeine Formel (O(PO₃)n)⁽ⁿ⁺²⁾⁻ auf, wobei n der Kettenlänge entspricht. Ein Polyphosphat kann bis zu mehreren hundert PO₄-Tetraedern umfassen. Bevorzugt werden jedoch Polyphosphate mit kürzeren Kettenlängen eingesetzt. Bevorzugt weist n Werte von 2 bis 100, insbesondere bevorzugt 5 bis 50 auf. Es können auch höher kondensierte Polyphosphate verwendet werden, d.h. Polyphosphate, in welchen die PO₄-Tetraeder über mehr als zwei Ecken miteinander verbunden sind und daher eine Polymerisation in zwei bzw. drei Dimensionen zeigen.

Über Metaphosphate werden zyklische Strukturen verstanden, die aus PO₄-Tetraedern aufgebaut sind, die jeweils über Ecken miteinander verbunden sind. Metaphosphate weisen die allgemeine Formel ((PO₃)n)ⁿ⁻ auf, wobei n mindestens 3 beträgt. Bevorzugt weist n Werte von 3 bis 10 auf.

Es können sowohl einzelne Phosphate verwendet werden als auch Gemische aus verschiedenen Phosphaten und/oder Phosphoroxiden.

Der bevorzugte Anteil der phosphorhaltigen Verbindung, bezogen auf den feuerfesten Formgrundstoff, beträgt zwischen 0,05 und 1,0 Gew.-%. Bei einem Anteil von weniger als 0,05 Gew.% ist kein deutlicher Einfluss auf die Formbeständigkeit der Gießform festzustellen. Übersteigt der Anteil des Phosphats 1,0 Gew.%, nimmt die Heißfestigkeit der Gießform stark ab. Bevorzugt wird der Anteil der phosphorhaltigen Verbindung zwischen 0,1 und 0,5 Gew.% gewählt.

Die phosphorhaltige, anorganische Verbindung enthält bevorzugt zwischen 40 und 90 Gew.%, insbesondere bevorzugt zwischen 50 und 80 Gew.% Phosphor, berechnet als P₂O₅. Die phosphorhaltige Verbindung kann an sich in fester oder gelöster Form der Formstoffmischung zugesetzt sein. Bevorzugt ist die phosphorhaltige Verbindung der Formstoffmischung als Feststoff zugesetzt. Wird die phosphorhaltige Verbindung in gelöster Form zugegeben, ist Wasser als Lösungsmittel bevorzugt. Als weiterer Vorteil eines Zusatzes phosphorhaltiger Verbindungen zu Formstoffmischungen zur Herstellung von Gießformen wurde gefunden, dass die Formen nach dem Metallguss einen sehr guten Zerfall zeigen. Dies trifft für Metalle zu, die niedrigere Gießtemperaturen benötigen, wie Leichtmetalle, insbesondere Aluminium. Beim Eisenguss wirken höhere Temperaturen von mehr als 1200 °C auf die Gießform ein, sodass eine erhöhte Gefahr eines Verglasens der Gießform und damit einer Verschlechterung der Zerfallseigenschaften besteht.

In einer weiteren Ausführungsform können der erfindungsgemäßen Formstoffmischung organische Verbindungen (gemäß EP 1 802 409 B1 und WO 2008/046651) zugesetzt sein. Ein geringer Zusatz von organischen Verbindungen kann für spezielle Anwendungen vorteilhaft sein - beispielsweise, um die thermische Ausdehnung der ausgehärteten Formstoffmischung zu regulieren. Allerdings ist ein solcher Zusatz nicht bevorzugt, da dies wiederum mit Emissionen von CO₂ und anderen Pyrolyseprodukten verbunden ist.

Bindemittel, welche Wasser enthalten, weisen im Vergleich zu Bindemitteln auf Basis organischer Lösungsmittel i.A. eine schlechtere Fließfähigkeit auf. Dies bedeutet, dass sich Formwerkzeuge mit engen Durchgängen und mehreren Umlenkungen schlechter füllen lassen. Als Folge davon können die Kerne Abschnitte mit ungenügender Verdichtung besitzen, was wiederum beim Abguss zu Gussfehlern führen kann. Gemäß einer vorteilhaften Ausführungsform enthält die erfindungsgemäße Formstoffmischung einen Anteil an plättchenförmigen Schmiermitteln, insbesondere Grafit oder MoS₂. Überraschend hat sich gezeigt, dass bei einem Zusatz derartiger Schmiermittel, insbesondere von Grafit, auch komplexe Formen mit dünnwandigen Abschnitten hergestellt werden können, wobei die Gießformen durchgängig eine gleichmäßig hohe Dichte und Festigkeit aufweisen, so dass beim Gießen im Wesentlichen keine Gussfehler beobachtet wurden. Die Menge des zugesetzten plättchenförmigen Schmiermittels, insbesondere Grafits, beträgt vorzugsweise 0,05 bis 1 Gew.%, besonders bevorzugt 0,05 bis 0,5 Gew.%, bezogen auf den Formgrundstoff.

Auch sind oberflächenaktive Substanzen einsetzbar, insbesondere Tenside, um die Fließfähigkeit der Formstoffmischung verbessern. Geeignete Vertreter dieser Verbindungen sind z.B. in WO 2009/056320 (= US 2010/0326620 A1) beschrieben. Genannt seien hier insbesondere Tenside mit Schwefelsäure- oder Sulfonsäure-Gruppe(n).

Unter einem oberflächenaktiven Stoff wird ein Stoff verstanden, welcher auf einer wässrigen Oberfläche eine monomolekulare Schicht ausbilden kann, also beispielsweise zur Ausbildung einer Membran befähigt ist. Femer wird durch einen oberflächenaktiven Stoff die Oberflächenspannung von Wasser herabgesetzt. Geeignete oberflächenaktive Stoffe sind beispielsweise Silikonöle.

Besonders bevorzugt ist der oberflächenaktive Stoff ein Tensid. Tenside umfassen einen hydrophilen Teil (Kopf) und einen langen hydrophoben Teil (Schwanz), welche in ihren Eigenschaften so ausgewogen sind, dass die Tenside in einer wässrigen Phase beispielsweise Micellen ausbilden oder sich an der Grenzfläche anreichem können.

Es können an sich alle Klassen von Tensiden in der erfindungsgemäßen Formstoffmischung eingesetzt werden. Geeignet sind neben anionischen Tensiden auch nichtionische Tenside, kationische Tenside sowie amphotere Tenside.

Beispielhafte nichtionische Tenside sind beispielsweise ethoxylierte oder propoxylierte langkettige Alkohole, Amine oder Säuren, wie Fettalkoholethoxylate, Alkylphenolethoxylate, Fettaminethoxylate, Fettsäureethoxylate, die entsprechenden Propoxylate oder auch Zuckertenside, wie beispielsweise Polyglykoside auf Fettalkoholbasis. Die Fettalkohole umfassen bevorzugt 8 bis 20 Kohlenstoffatome. Geeignete kationische Tenside sind Alkylammoniumverbindungen und Imidazoliniumverbindungen.

Bevorzugt werden anionische Tenside für die erfindungsgemäße Formstoffmischung verwendet. Das anionische Tensid umfasst als polare, hydrophile Gruppe bevorzugt eine Sulfat-, Sulfonat-, Phosphat- oder Carboxylatgruppe, wobei Sulfat- und Phosphatgruppen besonders bevorzugt sind. Werden sulfatgruppenhaltige anionische Tenside verwendet, so werden bevorzugt die Monoester der Schwefelsäure eingesetzt. Werden Phosphatgruppen als polare Gruppe des anionischen Tensids verwendet, so sind die Mono- und Diester der Orthophosphorsäure besonders bevorzugt.

Gemeinsam ist den in der erfindungsgemäßen Formstoffmischung verwendeten Tensiden, dass der unpolare, hydrophobe Abschnitt (Schwanz) bevorzugt von Alkyl-, Aryl- und/oder Aralkylgruppen gebildet wird, die bevorzugt mehr als 6 Kohlenstoffatome, besonders bevorzugt 8 bis 20 Kohlenstoffatome umfassen. Der hydrophobe Abschnitt kann sowohl lineare Ketten als auch verzweigte Strukturen aufweisen. Ebenfalls können Mischungen verschiedener Tenside eingesetzt werden. Besonders bevorzugte anionische Tenside sind ausgewählt aus der Gruppe von Oleylsulfat, Stearylsulfat, Palmitylsulfat, Myristylsulfat, Laurylsulfat, Decylsulfat, Octylsulfat, 2-Ethylhexylsulfat, 2-Ethyloctylsulfat, 2-Ethyldecylsulfat, Palmitoleylsulfat, Linolylsulfat, Laurylsulfonat, 2-Ethyldecylsulfonat, Palmitylsulfonat, Stearylsulfonat, 2-Ethylstearylsulfonat, Linolylsulfonat, Hexylphosphat, 2-Ethylhexylphosphat, Caprylphosphat, Laurylphosphat, Myristylphosphat, Palmitylphosphat, Palmitoleylphosphat, Oleylphosphat, Stearylphosphat, Poly-(1,2-ethandiyl-)-Phenolhydroxiphosphat, Poly-(1,2-ethandiyl-)-Stearylphosphat, sowie Poly-(1,2-ethandiyl-)-Oleylphosphat.

In der erfindungsgemäßen Formstoffmischung ist der reine oberflächenaktive Stoff bezogen auf das Gewicht des feuerfesten Formgrundstoffs bevorzugt in einem Anteil von 0,001 bis 1 Gew.-%, besonders bevorzugt 0,01 bis 0,2 Gew.-% enthalten. Häufig werden derartige oberflächenaktive Stoffe kommerziell als 20 bis 80%ige Lösung angeboten. In diesem Fall sind insbesondere die wässrigen Lösungen der oberflächenaktiven Stoffe bevorzugt.

Im Prinzip kann der oberflächenaktive Stoff sowohl in gelöster Form, beispielsweise im Binder, als separate Komponente oder aber über eine Feststoffkomponente, die als Trägermaterial fungiert, beispielsweise in einem Additiv, der Formstoffmischung zugesetzt werden. Besonders bevorzugt ist der oberflächenaktive Stoff im Binder gelöst.

Neben den genannten Bestandteilen kann die erfindungsgemäße Formstoffmischung noch weitere Zusätze umfassen. Beispielsweise können interne Trennmittel zugesetzt werden, welche die Ablösung der Gießformen aus dem Formwerkzeug erleichtern. Geeignete interne Trennmittel sind z.B. Calciumstearat, Fettsäureester, Wachse, Naturharze oder spezielle Alkydharze.

Weiter können auch Silane zur erfindungsgemäßen Formstoffmischung gegeben werden, um die Beständigkeit der Formen und Kerne gegenüber hoher Luftfeuchtigkeit und/oder gegenüber Formstoffüberzügen auf Wasserbasis zu erhöhen. Gemäß einer weiteren bevorzugten Ausführungsform enthält die erfindungsgemäße Formstoffmischung einen Anteil zumindest eines Silans. Geeignete Silane sind beispielsweise Aminosilane, Epoxysilane, Mercaptosilane, Hydroxysilane und Ureidosilane. Beispiele für geeignete Silane sind Aminopropyltrimethoxysilan, Hydroxypropyltrimethoxysilan, 3-Ureidopropyltriethoxysilan, Mercaptopropyltrimethoxysilan, Glycidoxypropyltrimethoxysilan, (3,4-Epoxycyclohexyl)trimethoxy-silan und N-(Aminoethyl)-aminopropyltrimethoxysilan. Bezogen auf das Bindemittel werden typischerweise 0,1 bis 2 Gew.% Silan eingesetzt, vorzugsweise 0,1 bis 1 Gew.%. Weitere geeignete Additive sind Alkalimetallsilikonate, z.B. Kaliummethylsilikonat, von denen 0,5 bis 15 Gew.%, vorzugsweise 1 bis 10 Gew.% und besonders bevorzugt 1 bis 5 Gew.% bezogen auf das Bindemittel eingesetzt werden können. Enthält die Formstoffmischung Silane und/oder Alkalimethylsilikonate, so erfolgt deren Zugabe üblicherweise in der Form, dass sie vorab in das Bindemittel eingearbeitet werden. Sie können dem Formstoff aber auch als getrennte Komponente zugegeben werden.

Die erfindungsgemäße Formstoffmischung stellt eine intensive Mischung aus zumindest den genannten Bestandteilen dar. Dabei sind die Teilchen des feuerfesten Formgrundstoffs vorzugsweise mit einer Schicht des Bindemittels überzogen. Durch Verdampfen des im Bindemittel vorhandenen Wassers (ca. 40-70 Gew.%, bezogen auf das Gewicht des Bindemittels) kann dann ein fester Zusammenhalt zwischen den Teilchen des feuerfesten Formgrundstoffs erreicht werden.

Trotz der mit dem erfindungsgemäßen Bindemittelsystem erreichbaren hohen Festigkeiten zeigen die mit der erfindungsgemäßen Formstoffmischung hergestellten Gießformen nach dem Abguss überraschenderweise einen guten Zerfall, sodass sich die Formstoffmischung nach dem Guss auch aus engen und verwinkelten Abschnitten der Gießform wieder ausgießen lässt. Die aus den erfindungsgemäßen Formstoffmischungen hergestellten Formkörper eignen sich generell zum Gießen von Metallen, wie beispielsweise Leichtmetalle, Buntmetalle oder Eisenmetalle. Besonders bevorzugt eignet sich die erfindungsgemäße Formstoffmischung allerdings für das Gießen von Eisenmetallen.

Die Erfindung betrifft weiter ein Verfahren zur Herstellung von Gießformen für die Metallverarbeitung, wobei die erfindungsgemäße Formstoffmischung verwendet wird. Das erfindungsgemäße Verfahren umfasst die Schritte:
- Bereitstellen der oben beschriebenen Formstoffmischung;
- Formen der Formstoffmischung;
- Aushärten der geformten Formstoffmischung, wobei die ausgehärtete Gießform erhalten wird.

Bei der Herstellung der erfindungsgemäßen Formstoffmischung wird im Allgemeinen so vorgegangen, dass (z.B. ausgehend von einem Mehrkomponenten-1-System) zunächst der feuerfeste Formgrundstoff vorgelegt und dann unter Rühren das Bindemittel zugegeben wird. Dabei kann das Wasserglas sowie das erfindungsgemäße partikuläre Metalloxid an sich in beliebiger Reihenfolge zugegeben werden.

Die oben beschriebenen Additive können an sich in jeglicher Form der Formstoffmischung zugesetzt werden. Sie können einzeln oder auch als Mischung zudosiert werden. Gemäß einer bevorzugten Ausführungsform wird das Bindemittel als Zwei-Komponenten-System bereitgestellt, wobei eine erste flüssige Komponente das Wasserglas und ggf. ein Tensid (siehe oben) enthält und eine zweite feste Komponente das erfindungsgemäße Metalloxid umfasst neben ggf. einer oder mehrerer der oben beschriebenen Komponenten: synthetisches amorphes Siliziumdioxid, Kohlenhydrat, Phosphate, einen vorzugsweise plättchenförmigen Schmierstoff und/oder Bariumsulfat, insbesondere synthetisches amorphes Siliziumdioxid.

Vorzugsweise wird die Formstoffmischung in Form eines Mehrkomponenten¬-Systems bereitgestellt umfassend zumindest die folgenden räumlich separat voneinander vorliegenden Komponenten (A) und (B) und ggf. (F):
(A) eine pulverförmige Additiv-Komponente umfassend zumindest ein partikuläres Metalloxid, wobei das partikuläre Metalloxid
   - zumindest ein Aluminiumoxid in der alpha-Phase und/oder
   - zumindest ein Aluminium/Silizium-Mischoxid, ausgenommen Aluminium/Silizium-Mischoxide mit Schichtsilikat-Struktur
      umfasst oder daraus besteht und
   - kein Wasserglas;
(B) eine flüssige Binder-Komponente (B) umfassend zumindest
   - Wasserglas enthaltend Wasser; und ggf.
(F) eine rieselfähige Feuerfest-Komponente (F) umfassend
   - einen feuerfesten Formgrundstoff und
   - kein Wasserglas.

Die weiteren Bestandteile der Komponenten sind jeweils weiter vorne näher definiert. Im Einzelnen sind die weiter vorne genannten weiteren Bestandteile den Komponenten (A), (B) und (F) vorzugsweise wie folgt zuzuordnen:
Komponente (A) (Additiv-Komponente): partikuläres amorphes SiO₂, Bariumsulfat, phosphorhaltige Verbindung (als Feststoff), organische Verbindungen;
Komponente (B) (Binder-Komponente): Tenside; phosphorhaltige Verbindung (soweit wasserlöslich);
Komponente (F) (Feuerfest-Komponente): künstliche Formstoffe.

Mit dem Mehrkomponenten¬-System sind die Formstoffmischung durch Zusammenbringen der Komponenten in den hierfür erforderlichen Mengen herstellbar bzw. durch Bereitstellen der Komponente mit den hierfür erforderlichen Mengen der oben näher definierten Bestandteile.

Bei der Herstellung der Formstoffmischung wird der feuerfeste Formgrundstoff in einem Mischer vorgelegt und dann bevorzugt zunächst die feste(n) Komponente(n) in Form der partikulären Metalloxide, sowie ggf. des amorphen Siliziumdioxids, des Bariumsulfats oder weiter pulverförmiger Feststoffe zugegeben und mit dem feuerfesten Formgrundstoff vermischt.

Die Mischdauer wird so gewählt, dass eine innige Durchmischung von feuerfestem Formgrundstoff und zugegebenem Feststoff erfolgt. Die Mischdauer ist abhängig von der Menge der herzustellenden Formstoffmischung sowie von dem verwendeten Mischaggregat. Bevorzugt wird die Mischdauer zwischen 1 und 5 Minuten gewählt.

Unter bevorzugt weiterem Bewegen der Mischung wird dann die flüssige Komponente des Bindemittels zugegeben und dann die Mischung solange weiter vermischt, bis sich auf den Körnern des feuerfesten Formgrundstoffs eine gleichmäßige Schicht des Bindemittels ausgebildet hat. Auch hier ist die Mischdauer von der Menge der herzustellenden Formstoffmischung sowie vom verwendeten Mischaggregat abhängig. Bevorzugt wird die Dauer für den Mischvorgang zwischen 1 und 5 Minuten gewählt. Unter einer flüssigen Komponente wird sowohl eine Mischung verschiedener flüssiger Komponenten als auch die Gesamtheit aller flüssigen Einzelkomponenten verstanden, wobei letztere auch einzeln zugegeben werden können. Ebenso wird unter einer festen Komponente sowohl das Gemisch einzelner oder aller der oben beschriebenen festen Komponenten als auch die Gesamtheit aller fester Einzelkomponenten verstanden, wobei letztere gemeinsam oder auch nacheinander zur Formstoffmischung gegeben werden können. Gemäß einer anderen Ausführungsform kann auch zunächst die flüssige Komponente des Bindemittels zum feuerfesten Formgrundstoff gegeben werden und erst dann die feste Komponente der Mischung zugeführt werden. Gemäß einer weiteren Ausführungsform wird zunächst 0,05 bis 0,3% Wasser, bezogen auf das Gewicht des Formgrundstoffes, zum feuerfesten Formgrundstoff gegeben und erst anschließend die festen und flüssigen Komponenten des Bindemittels zugegeben.

Bei dieser Ausführungsform kann ein überraschender positiver Effekt auf die Verarbeitungszeit der Formstoffmischung erzielt werden. Die Erfinder nehmen an, dass die wasserentziehende Wirkung der festen Komponenten des Bindemittels auf diese Weise reduziert und der Aushärtevorgang dadurch verzögert wird. Die Formstoffmischung wird anschließend in die gewünschte Form gebracht. Dabei werden die für die Formgebung üblichen Verfahren verwendet. Beispielsweise kann die Formstoffmischung mittels einer Kernschießmaschine mit Hilfe von Druckluft in das Formwerkzeug geschossen werden.

Die Formstoffmischung wird anschließend ausgehärtet, wobei alle Verfahren herangezogen werden können, die bei Bindemitteln auf der Basis von Wasserglas bekannt sind, z.B. Heißhärtung, Begasen mit CO₂ oder Luft bzw. einer Kombination von beidem sowie Härtung durch flüssige oder feste Katalysatoren.

Bei der Heißhärtung wird der Formstoffmischung Wasser entzogen. Dadurch werden vermutlich auch Kondensationsreaktionen zwischen Silanolgruppen initiiert, sodass eine Vernetzung des Wasserglases eintritt.

Das Erwärmen kann beispielsweise in einem Formwerkzeug erfolgen, das vorzugsweise eine Temperatur von 100 bis 300 °C, besonders bevorzugt eine Temperatur von 120 bis 250 °C aufweist. Es ist möglich, die Gießform bereits im Formwerkzeug vollständig auszuhärten. Es ist aber auch möglich, die Gießform nur in ihrem Randbereich auszuhärten, so dass sie eine ausreichende Festigkeit aufweist, um aus dem Formwerkzeug entnommen werden zu können. Die Gießform kann dann anschließend vollständig ausgehärtet werden, indem ihr weiteres Wasser entzogen wird. Dies kann beispielsweise in einem Ofen erfolgen. Der Wasserentzug kann beispielsweise auch erfolgen, indem das Wasser bei vermindertem Druck verdampft wird.

Die Aushärtung der Gießformen kann durch Einblasen von erhitzter Luft in das Formwerkzeug beschleunigt werden. Bei dieser Ausführungsform des Verfahrens wird ein rascher Abtransport des im Bindemittel enthaltenen Wassers erreicht, wodurch die Gießform in für eine industrielle Anwendung geeigneten Zeiträumen verfestigt wird. Die Temperatur der eingeblasenen Luft beträgt vorzugsweise 100 °C bis 180 °C, insbesondere bevorzugt 120 °C bis 150 °C. Die Strömungsgeschwindigkeit der erhitzten Luft wird vorzugsweise so eingestellt, dass eine Aushärtung der Gießform in für eine industrielle Anwendung geeigneten Zeiträumen erfolgt. Die Zeiträume hängen von der Größe der hergestellten Gießformen ab. Angestrebt wird eine Aushärtung im Zeitraum von weniger als 5 Minuten, vorzugsweise weniger als 2 Minuten. Bei sehr großen Gießformen können jedoch auch längere Zeiträume erforderlich sein.

Die Entfernung des Wassers aus der Formstoffmischung kann auch in der Weise erfolgen, dass das Erwärmen der Formstoffmischung durch Einstrahlen von Mikrowellen bewirkt wird.

Die Einstrahlung der Mikrowellen wird aber bevorzugt vorgenommen, nachdem die Gießform aus dem Formwerkzeug entnommen wurde. Dazu muss die Gießform jedoch bereits eine ausreichende Festigkeit aufweisen. Wie bereits erläutert, kann dies beispielsweise dadurch bewirkt werden, dass zumindest eine äußere Schale der Gießform bereits im Formwerkzeug ausgehärtet wird.

Die erfindungsgemäßen Verfahren eignen sich an sich für die Herstellung aller für den Metallguss üblicher Gießformen, also beispielsweise von Kernen und Formen.

Die aus der erfindungsgemäßen Formstoffmischung bzw. mit dem erfindungsgemäßen Verfahren hergestellten Gießformen weisen eine hohe Festigkeit unmittelbar nach der Herstellung auf, ohne dass die Festigkeit der Gießformen nach dem Aushärten so hoch ist, dass Schwierigkeiten nach der Herstellung des Gussstücks beim Entfernen der Gießform auftreten. Weiterhin weisen diese Gießformen eine hohe Stabilität bei erhöhter Luftfeuchtigkeit auf, d.h. die Gießformen können überraschenderweise auch über längere Zeit hinweg problemlos gelagert werden. Als Vorteil weist die Gießform eine sehr hohe Stabilität bei mechanischer Belastung auf, sodass auch dünnwandige Abschnitte der Gießform verwirklicht werden können, ohne dass diese durch den metallostatischen Druck beim Gießvorgang deformiert werden. Ein weiterer Gegenstand der Erfindung ist daher eine Gießform, welche nach dem oben beschriebenen erfindungsgemäßen Verfahren erhalten wurde.

Im Weiteren wird die Erfindung anhand von Beispielen ohne auf diese beschränkt zu sein näher erläutert.

### Beispiele

### Einfluss verschiedener aluminiumoxidhaltiger Pulver auf die Biegefestigkeiten und auf die Verarbeitungszeit

Für die Prüfung einer Formstoffmischung wurden sog. Georg-Fischer-Prüfriegel hergestellt. Unter Georg-Fischer-Prüfriegeln werden quaderförmige Prüfriegel mit den Abmessungen 150 mm x 22,36 mm x 22,36 mm verstanden. Die Zusammensetzungen der Formstoffmischungen sind in Tabelle 1 angegeben. Zur Herstellung der Georg-Fischer-Prüfriegel wurde wie folgt vorgegangen:
- Die in Tabelle 1 aufgeführten Komponenten wurden in einem Laborflügelmischer (Firma Vogel & Schemmann AG, Hagen, DE) gemischt. Dazu wurde zunächst der Quarzsand vorgelegt und unter Rühren das Wasserglas zugegeben. Als Wasserglas wurde ein Natriumwasserglas verwendet, das Anteile von Kalium aufwies. In den nachfolgenden Tabellen ist das Modul daher mit SiO₂:M₂O angegeben, wobei M die Summe aus Natrium und Kalium angibt. Nachdem die Mischung für eine Minute gerührt worden war, wurden ggf. amorphes SiO₂ und/oder Bariumsulfat unter weiterem Rühren hinzugegeben. Die Mischung wurde anschließend noch für eine weitere Minute gerührt.
- Die Formstoffmischungen wurden in den Vorratsbunker einer H 2,5 Hot-Box-Kernschießmaschine der Firma Röperwerk - Gießereimaschinen GmbH, Viersen, DE, überführt, deren Formwerkzeug auf 180 °C erwärmt war.
- Die Formstoffmischungen wurden mittels Druckluft (5 bar) in das Formwerkzeug eingebracht und verblieben für weitere 35 Sekunden im Formwerkzeug.
- Zur Beschleunigung der Aushärtung der Mischungen wurde während der letzten 20 Sekunden Heißluft (2 bar, 100 °C beim Eintritt in das Werkzeug) durch das Formwerkzeug geleitet.
- Das Formwerkzeug wurde geöffnet und die Prüfriegel entnommen.

Zur Bestimmung der Biegefestigkeiten wurden die Prüfriegel in ein Georg-Fischer-Festigkeitsprüfgerät, ausgerüstet mit einer 3-Punkt-Biegevorrichtung (DISA Industrie AG, Schaffhausen, CH) eingelegt und die Kraft gemessen, welche zum Bruch der Prüfriegel führte. Die Biegefestigkeiten wurden nach folgendem Schema gemessen:
- 10 Sekunden nach der Entnahme (Heißfestigkeiten)
- 1 Stunde nach Entnahme (Kaltfestigkeiten)
- 10 Sekunden nach der Entnahme (Heißfestigkeiten) der für 1h gelagerten (ohne Luftwechsel) Formstoffmischung.
- 10 Sekunden nach der Entnahme (Heißfestigkeiten) der für 2h gelagerten (ohne Luftwechsel) Formstoffmischung.

Ein Vergleich der Biegefestigkeiten der Mischungen 1.01 und 1.02 zeigt, dass sich sowohl die Heißfestigkeiten als auch die Kaltfestigkeiten durch die Zugabe eines amorphen SiO₂-Pulvers erhöhen. Dies steht im Einklang mit dem Stand der Technik wie er in DE 102004042535 A1 beschrieben wird.

Ein Vergleich der Mischung 1.02 mit den Mischungen 1.03 bis 1.09 weist eindeutig darauf hin, dass nicht-erfindungsgemäßes aluminiumoxidhaltiges Pulver zu schlechteren Festigkeiten führt bzw. die Verarbeitungszeit der Formstoffmischung herabsetzt (siehe Festigkeitswerte der Mischung 1.08). Hingegen zeigen die Mischungen 1.10 bis 1.13, dass erfindungsgemäßes aluminiumoxidhaltiges Pulver die Festigkeiten weniger stark bis gar nicht beeinflusst. Auch die Verarbeitungszeit (größer als 2 h) ist ausreichend gegeben.

**Tabelle 1**

| ***Zusammensetzungen der Formstoffmischungen*** | | | | | |
|---|---|---|---|---|---|
| | Quarzsand H32 | Alkaliwasserglas | Amorphes SiO₂ | Additiv | |
| 1.01 | 100 GT | 2,0 GT ^{a)} | - | - | Vergleich |
| 1.02 | 100 GT | 2,0 GT ^{a)} | 0,5 GT ^{b)} | - | Vergleich |
| 1.03 | 100 GT | 2,0 GT ^{a)} | 0,5 GT ^{b)} | 0,5 GT ^{c)} | Vergleich |
| 1.04 | 100 GT | 2,0 GT ^{a)} | 0,5 GT ^{b)} | 0,5 GT ^{d)} | Vergleich |
| 1.05 | 100 GT | 2,0 GT ^{a)} | 0,5 GT ^{b)} | 0,5 GT ^{e)} | Vergleich |
| 1.06 | 100 GT | 2,0 GT ^{a)} | 0,5 GT ^{b)} | 0,5 GT ¹⁾ | Vergleich |
| 1.07 | 100 GT | 2,0 GT ^{a)} | 0,5 GT ^{b)} | 0,5 GT ^{g)} | Vergleich |
| 1.08 | 100 GT | 2,0 GT ^{a)} | 0,5 GT ^{b)} | 0,5 GT ^{h)} | Vergleich |
| 1.09 | 100 GT | 2,0 GT ^{a)} | 0,5 GT ^{b)} | 0,5 GT ^{l)} | erfind unqsqem. |
| 1.10 | 100 GT | 2,0 GT ^{a)} | 0,5 GT ^{b)} | 0,5 GT ^{m)} | erfindungsgem. |
| 1.11 | 100 GT | 2,0 GT ^{a)} | 0,5 GT ^{b)} | 0,5 GT ⁿ⁾ | erfindungsgem. |
| 1.12 | 100 GT | 2,0 GT ^{a)} | 0,5 GT ^{b)} | 0,5 GT ^{o)} | erfindunqsqem. |

| | | | | | |
|---|---|---|---|---|---|
| Vergleich = nicht erfindungsgemäß | | | | | |

Die Indizes in Tabelle 1 haben jeweils folgende Bedeutung:
^{a)} Alkaliwasserglas mit einem Gewichtsmodul SiO₂:M₂O von ca. 2,1; bezogen auf das gesamte Wasserglas. Feststoffgehalt von ca. 35%
^{b)} Microsilica weiß GHL DL971W (amorphes SiO₂, Fa. RW silicium GmbH; Entstehung bei der metallurgischen Erzeugung von Silizium im Lichtbogenofen)
^{c)} AEROXIDE Alu 130 (pyrogenes Aluminiumoxid mit einer BET-Oberfläche von 130 m²/g; Fa. Evonik Industries AG)
^{d)} AEROXIDE Alu 65 (pyrogenes Aluminiumoxid mit einer BET-Oberfläche von 65 m²/g; Fa. Evonik Industries AG)
^{e)} ARGICAL-M 1000 (Metakaolin, calc. Kaolin, amorphes Material, welches aus lamellenartigen Partikeln besteht, BET-Oberfläche von 17 m²/g; Fa. AGS Mineraux (IMERYS))
^{f)} ARGICAL-M 1200S (Metakaolin, calc. Kaolin, amorphes Material, welches aus lamellenartigen Partikeln besteht, BET-Oberfläche von 19 m²/g; Fa. AGS Mineraux (IMERYS))
^{g)} Kaolin FP 80 gemahlen (BET-Oberfläche von 19 m²/g; Fa. Dorfner)
^{h)} ARGICAL C88 R (Kaolinit, BET-Oberfläche von 13 m²/g; AGS Mineraux (IMERYS))
^{l)} Kyanit 100 Mesh (Fa. Kyanite Mining Corporation)
^{m)} ALODUR WDCF coarse (Edelkorung Filterstaub, Fa. Treibacher Schleifmittel)
ⁿ⁾ ALODUR FZM S (Fused Zirconia Mullite, Fa. Treibacher Schleifmittel)
^{o)} ALODUR ZKSF (staubförmiges Nebenprodukt bei der Zirkonkorund-Herstellung, Fa. Treibacher Schleifmittel)

**Tabelle 2**

| ***Biegefestigkeiten*** | | | | | |
|---|---|---|---|---|---|
| | Heißfestigkeiten [N/cm²] | Festigkeiten nach 1 h [N/cm²] | Heißfestigkeiten (VZ 1h) [N/cm²] | Heißfestigkeiten (VZ 2h) [N/cm²] | |
| 1.01 | 90 | 410 | - | - | Vergleich |
| 1.02 | 150 | 470 | 145 | 150 | Vergleich |
| 1.03 | 55 | 200 | - | - | Vergleich |
| 1.04 | 75 | 210 | - | - | Vergleich |
| 1.05 | 115 | 310 | - | - | Vergleich |
| 1.06 | 75 | 270 | - | - | Vergleich |
| 1.07 | 105 | 250 | - | - | Vergleich |
| 1.08 | 130 | 340 | 110 | 100 | Vergleich |
| 1.09 | 150 | 465 | 150 | 140 | erfindungsgem. |
| 1.10 | 150 | 470 | 140 | 145 | erfindungsgem. |
| 1.11 | 145 | 465 | 150 | 140 | erfindungsgem. |
| 1.12 | 165 | 460 | 160 | 165 | erfindungsgem. |

| | | | | | |
|---|---|---|---|---|---|
| Vergleich = nicht erfindungsgemäß - = nicht bestimmt | | | | | |

### Verbesserung der Gussoberfläche

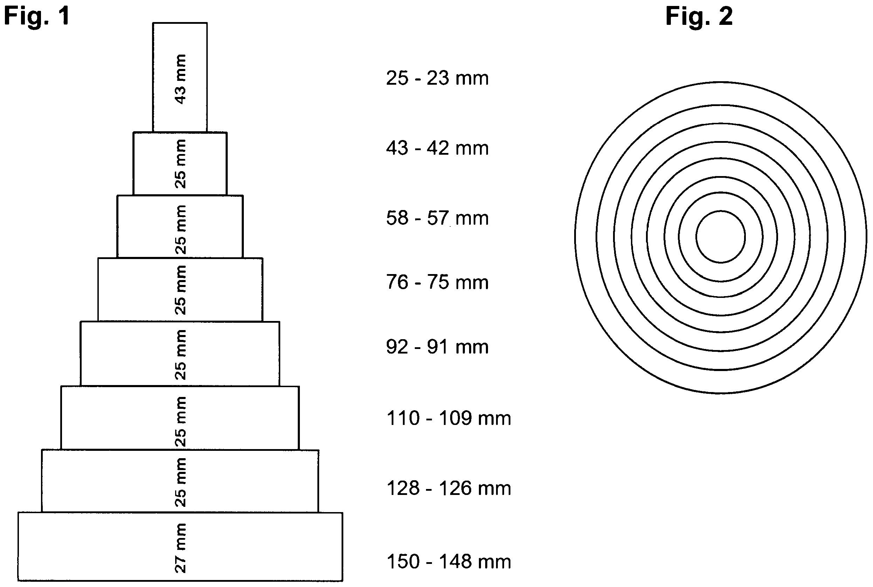

Der Einfluss erfindungsgemäßer partikulärer Metalloxide auf die Gussoberfläche wurde untersucht. Zu diesem Zweck wurde wie folgt verfahren:
- Sogenannte Stufenkerne wurden hergestellt. Form und Abmessungen sind in Fig. 1 und 2 dargestellt. Fig. 1 zeigt eine Seitenansicht unter Angabe der Stufenhöhen in mm innerhalb der Figur und der Außendurchmesser der Stufen rechts davon (erster Wert Durchmesser der Stufe unten, zweiter Wert Durchmesser der Stufe oben).

In Fig. 2 ist der Stufenkern von oben gezeigt. Die Herstellung der Stufenkerne erfolgte mit Hilfe einer Hot-Box-Kernschießmaschine, dessen Formwerkzeug auf 180°C erwärmt wurde. Die Formstoffmischung wurde mittels Druck in das Formwerkzeug eingebracht und zur Beschleunigung der Heißaushärtung wurde Heißluft durch die Formstoffmischung geleitet) der Formstoffmischungen 1.02 sowie 1.09 bis 1.12 in Tabelle 1 wurden in eine Sandgießform derart eingebaut, dass nur die Unterseite der breitesten Stufe (die Standfläche des pyramidenartigen Kerns) nicht während des Gießprozesses in Verbindung mit dem Gießmetall kommt. Die Stufenkerne hängen in der Gießform, welche dann mit dem flüssigen Metall so gefüllt wird, dass die kleinste Stufe (geringste Breite) als erstes in Verbindung mit dem flüssigen Metall kommt.
- Gegossen wurde mit einer Graugussschmelze GG20 (neuere Bezeichnung: GJL20) bei einer Gießtemperatur von ca. 1430 °C und einer Gießhöhe von 55 cm..
- Nach Abkühlen der Gießform wurde das Gussstück mittels Hammerschlägen vom Sand befreit.
- Die Gussteile wurden anschließend hinsichtlich der verbleibenden Sandanhaftungen, der möglichen Versinterungen/Vererzungen und der Rauigkeiten beurteilt. Es wurden zu diesem Zwecke die Noten von 1 (sehr gut) bis 6 (ungenügend) vergeben, welche sich in der Tabelle 3 wiederfinden. Die erhaltenen Gussstücke sind noch nicht frei von Sandanhaftungen, insbesondere im Bereich filigraner Kernpartien (Stufen mit einer geringeren Breite) sind noch Sandanhaftungen zu beobachten, daher wurde wie folgt weiterverfahren.
- Anschließend wurden die Gussstücke mit einer Sandstrahlvorrichtung mit einem leichten Sandstrahldruck von 1 bar gereinigt. Als Strahlgut dienten Glasperlen mit Teilchendurchmessern zwischen 100 und 200 µm.

Die Strahlzeit wurde auf eine Minute begrenzt. Die Bedingungen der Sandstrahlreinigung wurden so gewählt, dass Unterschied zwischen den mit unterschiedlichen Formstoffmischungen hergestellten Gussstücken sichtbar gemacht werden können ohne auf die Oberflächengüte im besonderen Maße einzuwirken.
- Die Gussteile wurden anschließend hinsichtlich der möglichen Versinterungen/Vererzungen und der Rauigkeiten der Oberfläche beurteilt. Es wurden zu diesem Zwecke die Noten von 1 (sehr gut) bis 6 (ungenügend) vergeben, welche sich in der Tabelle 3 wiederfinden.

**Tabelle 3**

| ***Beurteilung der Oberflächengüte*** | | | |
|---|---|---|---|
| | Oberflächengüte vor dem Sandstrahlen | Oberflächengüte nach dem Sandstrahlen | |
| 1.02 | 5 | 4 | Vergleich |
| 1.09 | 3 | 2 | erfindungsgem. |
| 1.10 | 3 | 2 | erfindungsgem. |
| 1.11 | 3 | 2 | erfindungsgem. |
| 1.12 | 2 | 1 | erfindungsgem. |

Der Gussausschnitt der Mischung 1.02 zeigt deutlich mehr Sandanhaftungen/Vererzungen bzw. Rauigkeiten als die Gussausschnitte der Mischungen 1.09 bis 1.12. Der positive Effekt erfindungsgemäßen partikulären Metalloxide auf die Gussoberflächen wird hier sehr deutlich. Besonders vorteilhafte Ergebnisse werden mit dem staubförmigen Nebenprodukt aus der Zirkonkorund -Herstellung erhalten. Daher ist der Einsatz dieses Stoffes ganz besonders bevorzugt.

Die Oberflächengüte wird durch den Einsatz von Sandstrahlen deutlich verbessert, da verbleibende Sandreste vollständig entfernt werden können - auch die Oberfläche wird durch diesen Einsatz etwas geglättet. Es wurde jedoch sehr darauf geachtet, alle Gussstücke unter gleichen Bedingungen zu bestrahlen. Daher sind die Unterschiede lediglich auf die Zusammensetzungen der Formstoffmischungen zurückzuführen. Auch ist zu bemerken, dass sogenannte "Blattrippen" nicht oder nur in einem sehr geringen Maße festgestellt werden konnten, obwohl als Formgrundstoff Quarzsand verwendet wurde.

## Patentansprüche

1. Formstoffmischung zur Herstellung von Formen und Kernen für die Metallverarbeitung, umfassend mindestens
a) einen feuerfesten Formgrundstoff;
b) Wasserglas als anorganisches Bindemittel; und
c) zumindest ein partikuläres Metalloxid, wobei das partikuläre Metalloxid
- zumindest ein Aluminiumoxid in der alpha-Phase und/oder
- zumindest ein Aluminium/Silizium-Mischoxid, ausgenommen Aluminium/Silizium-Mischoxide mit Schichtsilikat-Struktur, umfasst oder daraus besteht.

2. Formstoffmischung nach Anspruch 1, wobei das partikuläre Metalloxid weiterhin ein Oxid des Siliziums umfasst, ausgenommen ein partikuläres amorphes Siliziumdioxid.

3. Formstoffmischung nach zumindest einem der vorhergehenden Ansprüche, wobei das Aluminiumoxid in der alpha-Phase und das Aluminium/Silizium-Mischoxid , ausgenommen Aluminium/Silizium-Mischoxide mit Schichtsilikat-Struktur, zwischen 0,05 Gew.% und 2,0 Gew.%, vorzugsweise zwischen 0,1 Gew.% und 2,0 Gew.%, besonders bevorzugt zwischen 0,2 Gew.% und 0,8 Gew.% in der Formstoffmischung enthalten ist/sind, jeweils bezogen auf den Formgrundstoff.

4. Formstoffmischung nach zumindest einem der vorhergehenden Ansprüche, wobei das Aluminium/Silizium-Mischoxid, ausgenommen Aluminium/Silizium-Mischoxide mit Schichtsilikat-Struktur, bezogen auf die Summe an Aluminium- und Silizium- Atomen größer 50 bis 99 Atom% Aluminium-Atome aufweist, vorzugsweise größer 60 bis 85 Atom%.

5. Formstoffmischung nach zumindest einem der vorhergehenden Ansprüche, wobei das Aluminium/Silizium-Mischoxid, ausgenommen Aluminium/Silizium-Mischoxide mit Schichtsilikat-Struktur, ein Inselsilikat umfasst oder daraus besteht, insbesondere ein synthetisches oder natürliches Mullit oder ein Mitglied der Sillimanit-Gruppe ist, vorzugsweise Kyanit und unabhängig hiervon, vorzugsweise weiterhin Zirkoniumoxid enthält, eingebaut oder als eigene Phase.

6. Formstoffmischung nach zumindest einem der vorhergehenden Ansprüche, wobei das partikuläre Metalloxid
- zumindest ein Aluminiumoxid in der alpha-Phase und/oder
- zumindest ein Aluminium/Silizium-Mischoxid, ausgenommen Aluminium/Silizium-Mischoxide mit Schichtsilikat-Struktur, umfasst und ein Zirkonkorund und/oder ein Zirkonmullit ist oder enthält.

7. Formstoffmischung nach zumindest einem der vorhergehenden Ansprüche, wobei in dem partikulären Metalloxid
a) der Anteil des Oxids des Aluminiums, berechnet als Al₂O₃;
- größer als 25 Gew.% beträgt;
- vorzugsweise größer als 25 Gew.% und kleiner als 80 Gew.%;
- besonders bevorzugt größer als 30 Gew.% und kleiner als 70 Gew.%;
ganz besonders bevorzugt größer als 40 Gew.% und kleiner als 60 Gew.% beträgt; und
b) der Anteil des Oxids des Zirkoniums, berechnet als ZrO₂, wenn vorhanden,
- größer als 2 Gew.% beträgt;
- vorzugsweise größer als 2 Gew.% und kleiner als 50 Gew.%;
- besonders bevorzugt größer als 4 Gew.% und kleiner als 40 Gew.%;
- ganz besonders bevorzugt größer als 8 Gew.% und kleiner als 30 Gew.% beträgt; und
c) der Anteil des Oxids des Siliziums, berechnet als SiO₂, wenn vorhanden,
- größer als 5 Gew.% beträgt;
- vorzugsweise größer als 5 Gew.% und kleiner als 60 Gew.%;
- besonders bevorzugt größer als 15 Gew.% und kleiner als 50 Gew.%;
- ganz besonders bevorzugt größer als 20 Gew.% und kleiner als 45 Gew.% beträgt; und
d) vorzugsweise der Anteil anderer Metalle berechnet als deren Oxide in der Hauptoxidationsstufe, insbesondere Fe₂O₃, Na₂O, TiO₂, MgO und CaO, kleiner als 12 Gew.%, vorzugsweise kleiner als 8 Gew.% und insbesondere bevorzugt kleiner als 4 Gew.%. beträgt.

8. Formstoffmischung nach zumindest einem der vorhergehenden Ansprüche, wobei das partikuläre Metalloxid ein aluminiumoxidhaltiger und zirkoniumoxidhaltiger Staub erhältlich als Nebenprodukt bei der Zirkonkorund-Herstellung ist.

9. Formstoffmischung nach zumindest einem der vorhergehenden Ansprüche, wobei die spezifische Oberfläche des Mischoxids kleiner als 50 m²/g, bevorzugt kleiner als 30 m²/g, besonders bevorzugt kleiner als 17 m²/g und unabhängig hiervon größer als 0,1 m²/g, bevorzugt größer als 0,5 m²/g, besonders bevorzugt größer als 1 m²/g. beträgt.

10. Formstoffmischung nach zumindest einem der vorhergehenden Ansprüche, wobei die durchschnittliche Primärpartikelgröße bestimmt als Durchmesser des/der partikulären Metalloxide zwischen 0,01 µm und 50 µm, insbesondere zwischen 0,02 µm und 20 µm, besonders bevorzugt zwischen 0,02 µm und 10 µm beträgt.

11. Formstoffmischung nach zumindest einem der vorhergehenden Ansprüche, wobei der Rückstand bei einer Siebung des partikulären Metalloxids durch ein Sieb mit 75 µm Maschenweite (200 mesh) nicht mehr als ca. 50 Gew.%, vorzugsweise nicht mehr als ca. 30 Gew.%, weiter bevorzugt nicht mehr als ca. 20 Gew.% und besonders bevorzugt nicht mehr als ca. 15 Gew.%. beträgt.

12. Formstoffmischung nach zumindest einem der vorhergehenden Ansprüche, wobei das mittlere Verhältnis größter Längenausdehnung zu kleinster Längenausdehnung für alle Raumrichtungen der jeweiligen Partikel des partikulären Metalloxids bevorzugt kleiner als 10:1, besonders bevorzugt kleiner 5:1 und insbesondere bevorzugt kleiner als 3:1 und insbesondere bevorzugt kleiner als 1,1:1 beträgt.

13. Formstoffmischung nach einem der vorherigen Ansprüche, wobei das partikuläre Metalloxid als schütt- und rieselfähiges Pulver in der Formstoffmischung eingesetzt wird.

14. Formstoffmischung nach einem der vorherigen Ansprüche, wobei die Formstoffmischung weiterhin durch eines oder mehrere der folgenden Merkmale gekennzeichnet ist:
a) die Formstoffmischung enthält maximal 1 Gew.%, vorzugsweise maximal 0,2 Gew.%, organische Verbindungen;
b) die Formstoffmischung enthält weiterhin Bariumsulfat, vorzugsweise in einer Menge von 0,02 bis 5,0 Gew.%, besonders bevorzugt 0,1 bis 2,0 Gew.%, jeweils bezogen auf die gesamte Formstoffmischung;
c) das Wasserglas weist ein molares Modul SiO₂/M₂O von 1,6 bis 4,0, vorzugsweise 2,0 bis kleiner 3,5, mit M gleich Summe aus Lithium, Natrium und Kalium, auf;
d) die Formstoffmischung enthält 0,5 bis 5 Gew.% Wasserglas, vorzugsweise 1 bis 3,5 Gew.% Wasserglas, bezogen auf den Formgrundstoff, wobei der Feststoffanteil des Wasserglases 25 bis 65 Gew.%, vorzugsweise von 30 bis 60 Gew.%, beträgt;
e) die Formstoffmischung enthält weiterhin Tenside, vorzugsweise ausgewählt aus der Gruppe der anionischen Tenside, insbesondere solche mit einer Sulfonsäure- oder Sulfonatgruppe, insbesondere jeweils in einem Anteil von 0,001 bis 1 Gew. %, besonders bevorzugt 0,01 bis 0,2 Gew. %, bezogen auf das Gewicht des feuerfesten Formgrundstoffs;
f) die Formstoffmischung enthält weiterhin Graphit, vorzugsweise von 0,05 bis 1 Gew.%, insbesondere 0,05 bis 0,5 Gew.%, bezogen auf das Gewicht des feuerfesten Formgrundstoffs;
g) die Formstoffmischung enthält weiterhin zumindest eine phosphorhaltige Verbindung, vorzugsweise von 0,05 und 1,0 Gew.%, besonders bevorzugt 0,1 und 0,5 Gew.%, bezogen auf das Gewicht des feuerfesten Formgrundstoffs.

15. Verfahren zur Herstellung von Gießformen oder Kernen umfassend:
• Bereitstellen der Formstoffmischung nach zumindest einem der Ansprüche 1 bis 14,
• Einbringen der Formstoffmischung in eine Form, und
• Aushärten der Formstoffmischung.

16. Verfahren nach Anspruch 15, wobei die Formstoffmischung mittels einer Kernschießmaschine mit Hilfe von Druckluft in die Form eingebracht wird und die Form ein Formwerkzeug ist und das Formwerkzeug mit einem oder mehreren Gasen durchströmt wird, insbesondere CO₂ oder Gase enthaltend CO₂.

17. Verfahren nach Anspruch 15 oder 16, wobei die Formstoffmischung zum Aushärten einer Temperatur von zumindest 100°C, vorzugsweise für unter 5 min ausgesetzt wird.

18. Form oder Kern herstellbar nach zumindest einem der Ansprüche 15 bis 17.

19. Verwendung der Formstoffmischung nach zumindest einem der Ansprüche 1 bis 14 für das Gießen von Eisenmetallen oder Aluminium, enthaltend vorzugsweise weiterhin Mikrohohlkugeln insbesondere Aluminiumsilikatmikrohohlkugeln und/oder Borsilikatmikrohohlkugeln.

20. Mehrkomponenten-System zur Herstellung von Formen oder Kernen umfassend zumindest die folgende räumlich separat voneinander vorliegenden Komponenten (A) und (B):
(A) eine pulverförmige Additiv-Komponente umfassend zumindest
- ein partikuläres Metalloxid, wobei das partikuläre Metalloxid
- zumindest ein Aluminiumoxid in der alpha-Phase und/oder
- zumindest ein Aluminium/Silizium-Mischoxid, ausgenommen
Aluminium/Silizium-Mischoxide mit Schichtsilikat-Struktur umfasst oder daraus besteht
- kein Wasserglas; und
(B) eine flüssige Binder-Komponente (B) umfassend zumindest
- Wasserglas enthaltend Wasser.

21. Mehrkomponenten-System nach Anspruch 20 weiterhin umfassend (F) eine rieselfähige Feuerfest-Komponente (F) umfassend
- einen feuerfesten Formgrundstoff und
- kein Wasserglas.

22. Mehrkomponenten-System nach Anspruch 20 oder 21, zur Herstellung der Formstoffmischung nach einem der Ansprüche 1 bis 15.

## Claims

1. A mold material mixture for producing casting molds and cores for metal processing, comprising at least
a) a refractory mold base material;
b) water glass as an inorganic binder; and
c) at least one particulate metal oxide, wherein the particulate metal oxide comprises or consists of
- at least one aluminum oxide in the alpha phase and/or
- at least one aluminum /silicon mixed oxide, other than aluminum /silicon mixed oxides with layered silicate structure.

2. The mold material mixture according to claim 1, wherein the particulate metal oxide further comprises an oxide of silicon other than a particulate amorphous silicon dioxide.

3. The mold material mixture according to at least one of the preceding claims, wherein the aluminum oxide in the alpha phase and the aluminum /silicon mixed oxide, other than aluminum /silicon mixed oxides with layered silicate structure, is/are present at between 0.05 wt.% and 2.0 wt.%, preferably between 0.1 wt.% and 2.0 wt.%, particularly preferably between 0.2 wt.% and 0.8 wt.% of the mold material mixture, in each case based on the mold base material.

4. The mold material mixture according to at least one of the preceding claims, wherein the aluminum /silicon mixed oxide, other than aluminum /silicon mixed oxides with layered silicate structure, based on the sum of aluminum and silicon atoms, contains more than 50 to 99 atom% aluminum atoms, preferably more than 60 to 85 atom%.

5. The mold material mixture according to at least one of the preceding claims, wherein the aluminum /silicon mixed oxide, other than aluminum /silicon mixed oxides with layered silicate structure, comprises or consists of a nesosilicate, in particular is a synthetic or natural mullite or a member of the sillimanite group, preferably kyanite and independently thereof, preferably further comprises zirconium oxide, incorporated or as a distinct phase.

6. The mold material mixture according to at least one of the preceding claims, wherein the particulate metal oxide comprises
- - at least one aluminum oxide in the alpha phase and/or
- - at least one aluminum /silicon mixed oxide, other than aluminum /silicon mixed oxides with layered silicate structure, and is or contains a zirconia corundum and/or a zirconia mullite.

7. The mold material mixture according to at least one of the preceding claims, wherein in the particulate metal oxide
a) the fraction of the oxide of aluminum, calculated as Al₂O₃, is:
- greater than 25 wt.%;
- preferably greater than 25 wt.% and less than 80 wt.%;
- particularly preferably greater than 30 wt.% and less than 70 wt.%;
- even more particularly preferably greater than 40 wt.% and less than 60 wt.%; and
b) the fraction of the oxide of zirconium, calculated as ZrO₂, if present is:
- greater than 2 wt.%;
- preferably greater than 2 wt.% and less than 50 wt.%;
- particularly preferably greater than 4 wt.% and less than 40 wt.%;
- even more particularly preferably greater than 8 wt.% and less than 30 wt.%;and
c) the fraction of the oxide of silicon, calculated as SiO₂, if present, is:
- greater than 5 wt.%;
- preferably greater than 5 wt.% and less than 60 wt.%;
- particularly preferably greater than 15 wt.% and less than 50 wt.%;
- even more particularly preferably greater than 20 wt.% and less than 45 wt.%; and
d) preferably the fraction of other metals calculated as their oxides in the principal oxidation states, particularly Fe₂O₃, Na₂O, TiO₂, MgO and CaO, is less than 12 wt.%, preferably less than 8 wt.% and particularly preferably less than 4 wt.%.

8. The mold material mixture according to at least one of the preceding claims, wherein the particulate metal oxide is an aluminum oxide-containing and zirconium oxide-containing dust that can be obtained as a byproduct in zirconium corundum production.

9. The mold material mixture according to at least one of the preceding claims, wherein the specific surface of the mixed oxide is less than 50 m²/g, preferably less than 30 m²/g, particularly preferably less than 17 m²/g and independently thereof is greater than 0.1 m²/g, preferably greater than 0.5 m²/g, particularly preferably greater than 1 m²/g.

10. The mold material mixture according to at least one of the preceding claims, wherein the mean primary particle size determined as the diameter of particulate metal oxide(s) is between 0.01 µm and 50 µm, particularly between 0.02 µm and 20 µm, particularly preferably between 0.02 µm and 10 µm.

11. The mold material mixture according to at least one of the preceding claims, wherein the residue from sieving the particulate metal oxide through a screen with 75 µm mesh size (200 mesh) is no more than about 50 wt.%, preferably no more than about 30 wt.%, more preferably no more than about 20 wt.% and particularly preferably no more than about 15 wt.%.

12. The mold material mixture according to at least one of the preceding claims, wherein the mean ratio of the greatest longitudinal dimension to the smallest longitudinal dimension for all spatial directions of the respective particle of the particulate metal oxide is preferably less than 10:1, particularly preferably less than 5:1 and especially preferably less than 3:1 and especially preferably less than 1.1:1.

13. The mold material mixture according to one of the preceding claims, wherein the particulate metal oxide is used as a pourable, free-flowing powder in the mold material mixture.

14. The mold material mixture according to one of the preceding claims, wherein the mold material mixture is further **characterised by** one or more of the following features:
a) the mold material mixture contains a maximum of 1 wt.%, preferably a maximum of 0,2 wt.%, organic compounds;
b) the mold material mixture further comprises barium sulfate, preferably in a quantity of 0.02 to 5.0 wt.%, particularly preferably 0.1 to 2.0 wt.%, in each case based on the total mold material mixture;
c) the water glass has a SiO₂/M₂O molar modulus of 1.6 to 4.0, preferably 2.0 to less than 3.5, with M equal to the sum of lithium, sodium and potassium;
d) the mold material mixture contains 0.5 to 5 wt.% water glass, preferably 1 to 3.5 wt.% water glass, based on the mold base material, wherein the solid fraction of the water glass amounts to 25 to 65 wt.%, preferably 30 to 60 wt.%;
e) the mold material mixture further comprises surfactants, preferably selected from the group of anionic surfactants, particularly those with a sulfonic acid or sulfonate group, particularly in each case in a fraction of 0.001 to 1 wt.%, particularly preferably 0.01 to 0.2 wt.%, based on the weight of the refractory mold base material;
f) the mold material mixture further comprises graphite, preferably from 0.05 to 1 wt.%, particularly 0.05 to 0.5 wt.%, based on the weight of the refractory mold base material;
g) the mold material mixture further comprises at least one phosphorus-containing compound, preferably at between 0.05 and 1.0 wt.%, particularly preferably 0.1 and 0.5 wt.%, based on the weight of the refractory mold base materials.

15. A method for production of casting molds or cores comprising:
• supplying the mold material mixture according to at least one of claims 1 to 14,
• introducing the mold material mixture into a mold, and
• curing the mold material mixture.

16. The method according to claim 15, wherein the mold material mixture is introduced into the mold with a core shooting machine using compressed air and the mold is a molding tool and the molding tool has one or more gases passing through it, particularly CO₂ or gases containing CO₂.

17. A method according to claim 15 or 16, wherein for curing, the mold material mixture is exposed to a temperature of at least 100°C, preferably for less than 5 min.

18. A mold or core producible by at least one of claims 15 to 17.

19. The use of the mold material mixture according to at least one of claims 1 to 14 for casting ferrous metals or aluminum , preferably further comprising hollow microspheres, particularly aluminum silicate hollow microspheres and/or borosilicate hollow microspheres.

20. A multicomponent system for production of molds or cores comprising at least the following spatially separated components (A) and (B):
(A) a powdered additive component comprising at least
- a particulate metal oxide, wherein the particulate metal oxide comprises or consists of
- at least one aluminum oxide in the alpha phase and/or
- at least one aluminum/silicon mixed oxide, other than aluminum /silicon mixed oxides with layered silicate structure,
- no water glass; and
(B) a liquid binder component (B) comprising at least
- water glass containing water.

21. The multicomponent system according to claim 20, further comprising-(F) a free-flowing refractory component (F) comprising
- a refractory mold base material and
- no water glass.

22. The multicomponent system according to claim 20 or 21 for producing the mold material mixture according to one of claims 1 to 15.

## Revendications

1. Mélange à mouler pour la fabrication de moules et de noyaux pour la transformation du métal, comprenant au moins :
a) une matière de base réfractaire à mouler ;
b) du verre soluble en tant que liant inorganique ; et
c) au moins un oxyde métallique particulaire, l'oxyde métallique particulaire comprenant ou se composant
- d'au moins un oxyde d'aluminium en phase alpha et/ou
- d'au moins un oxyde mixte d'aluminium/de silicium, à l'exception des oxydes mixtes d'aluminium/de silicium ayant une structure de silicate lamellaire.

2. Mélange à mouler selon la revendication 1, dans lequel l'oxyde métallique particulaire comprend en outre un oxyde de silicium, à l'exception d'un dioxyde de silicium particulaire amorphe.

3. Mélange à mouler selon au moins l'une des revendications précédentes, dans lequel l'oxyde d'aluminium en phase alpha et l'oxyde mixte d'aluminium/de silicium, à l'exception des oxydes mixtes d'aluminium/de silicium ayant une structure de silicate lamellaire, sont présents dans le mélange à mouler en une quantité d'entre 0,05 % en poids et 2,0 % en poids, de préférence d'entre 0,1 % en poids et 2,0 % en poids, de manière particulièrement préférée d'entre 0,2 % en poids et 0,8 % en poids, respectivement par rapport à la matière de base à mouler.

4. Mélange à mouler selon au moins l'une des revendications précédentes, dans lequel l'oxyde mixte d'aluminium/de silicium, à l'exception des oxydes mixtes d'aluminium/de silicium ayant une structure de silicate lamellaire, par rapport à la somme des atomes d'aluminium et de silicium, présentent plus de 50 à 99 % atomique d'atomes d'aluminium, de préférence plus de 60 à 85 % atomique.

5. Mélange à mouler selon au moins l'une des revendications précédentes, dans lequel l'oxyde mixte d'aluminium/de silicium, à l'exception des oxydes mixtes d'aluminium/de silicium ayant une structure de silicate lamellaire, comprend ou se compose d'un nésosilicate, est en particulier une mullite synthétique ou naturelle ou un mélange du groupe sillimanite, de préférence une kyanite et indépendamment de cela, contient de préférence en outre un oxyde de zirconium, incrusté ou bien en tant que phase propre.

6. Mélange à mouler selon au moins l'une des revendications précédentes, dans lequel l'oxyde métallique particulaire comprend ou se compose
- d'au moins un oxyde d'aluminium en phase alpha et/ou
- d'au moins un oxyde mixte d'aluminium/de silicium, à l'exception des oxydes mixtes d'aluminium/de silicium ayant une structure de silicate lamellaire,
et est un corindon de zircone et/ou une mullite de zircone ou en contient.

7. Mélange à mouler selon au moins l'une des revendications précédentes, dans lequel, dans l'oxyde métallique particulaire,
a) la proportion de l'oxyde d'aluminium, calculé en tant qu'Al₂O₃ ;
- est supérieure à 25 % en poids ;
- est de préférence supérieure à 25 % en poids et inférieure à 80 % en poids ;
- est de manière particulièrement préférée supérieure à 30 % en poids et inférieure à 70 % en poids ;
est de manière tout particulièrement préférée supérieure à 40 % en poids et inférieure à 60 % en poids ; et
b) la proportion de l'oxyde de zirconium, calculé en tant que ZrO₂, s'il est présent,
- est supérieure à 2 % en poids ;
- est de préférence supérieure à 2 % en poids et inférieure à 50 % en poids ;
- est de manière particulièrement préférée supérieure à 4 % en poids et inférieure à 40 % en poids ;
- est de manière tout particulièrement préférée supérieure à 8 % en poids et inférieure à 30 % en poids ; et
c) la proportion de l'oxyde de silicium, calculé en tant que SiO₂, s'il est présent,
- est supérieure à 5 % en poids ;
- est de préférence supérieure à 5 % en poids et inférieure à 60 % en poids ;
- est de manière particulièrement préférée supérieure à 15 % en poids et inférieure à 50 % en poids ;
- est de manière tout particulièrement préférée supérieure à 20 % en poids et inférieure à 45 % en poids ; et
d) de préférence, la proportion des autres métaux calculés en tant que leurs oxydes au stade d'oxydation principal, en particulier Fe₂O₃, Na₂O, TiO₂, MgO et CaO, est inférieure à 12 % en poids, de préférence inférieure à 8 % en poids et de manière particulièrement préférée inférieure à 4 % en poids.

8. Mélange à mouler selon au moins l'une des revendications précédentes, dans lequel l'oxyde métallique particulaire est une poussière contenant de l'oxyde d'aluminium et contenant de l'oxyde de zirconium pouvant être obtenue en tant que sous-produit lors de la fabrication de corindon de zircone.

9. Mélange à mouler selon au moins l'une des revendications précédentes, dans lequel la surface spécifique de l'oxyde mixte est inférieure à 50 m²/g, de préférence inférieure à 30 m²/g, de manière particulièrement préférée inférieure à 17 m²/g et, indépendamment de cela, supérieure à 0,1 m²/g,de préférence supérieure à 0,5 m²/g, de manière particulièrement préférée supérieure à 1 m²/g.

10. Mélange à mouler selon au moins l'une des revendications précédentes, dans lequel la taille moyenne des particules primaires déterminée en tant que diamètre du ou des oxydes métalliques particulaires est comprise entre 0,01 µm et 50 µm, en particulier entre 0,02 µm et 20 µm et de manière particulièrement préférée entre 0,02 µm et 10 µm.

11. Mélange à mouler selon au moins l'une des revendications précédentes, dans lequel le résidu lors d'un tamisage de l'oxyde métallique particulaire à travers un tamis ayant un maillage de 75 µm (200 mesh) n'est pas supérieur à environ 50 % en poids, de préférence n'est pas supérieur à environ 30 % en poids, n'est en outre de préférence pas supérieur à environ 20 % en poids et, de manière particulièrement préférée, n'est pas supérieur à environ 15 % en poids.

12. Mélange à mouler selon au moins l'une des revendications précédentes, dans lequel le rapport moyen de l'extension la plus grande en longueur sur l'extension la plus petite en longueur pour toutes les directions spatiales des particules respectives de l'oxyde métallique particulaire est de préférence inférieur à 10:1, de manière particulièrement préférée inférieur à 5:1 et de manière particulièrement préférée inférieure à 3:1 et de manière particulièrement préférée inférieure à 1,1:1.

13. Mélange à mouler selon l'une des revendications précédentes, dans lequel l'oxyde métallique particulaire est mis en œuvre sous forme de poudre apte au déversement et à l'écoulement dans le mélange à mouler.

14. Mélange à mouler selon l'une des revendications précédentes, ledit mélange à mouler étant **caractérisé par** l'une ou plusieurs des caractéristiques suivantes :
a) le mélange à mouler contient au maximum 1 % en poids, de préférence au maximum 0,2 % en poids de composés organiques ;
b) le mélange à mouler contient en outre du sulfate de baryum, de préférence en une quantité de 0,02 à 5,0 % en poids, de manière particulièrement préférée de 0,1 à 2,0 % en poids, respectivement par rapport au mélange à mouler total ;
c) le verre soluble présente un module molaire SiO₂/M₂O de 1,6 à 4,0, de préférence de 2,0 à moins de 3,5, M étant égal à la somme du lithium, du sodium, et du potassium ;
d) le mélange à mouler contient 0,5 à 5 % en poids de verre soluble, de préférence 1 à 3,5 % en poids de verre soluble, par rapport à la matière de base à mouler, la proportion de matières solides du verre soluble étant de 25 à 65 % en poids, de préférence de 30 à 60 % en poids ;
e) le mélange à mouler contient en outre des tensioactifs, de préférence choisis dans le groupe des tensioactifs anioniques, en particulier ceux ayant un groupe acide sulfonique ou sulfonate, en particulier respectivement en une proportion de 0,001 à 1 % en poids, de manière particulièrement préférée de 0,01 à 0,2 % en poids, par rapport au poids de la matière de base à mouler réfractaire ;
f) le mélange à mouler contient en outre du graphite, de préférence de 0,05 à 1 % en poids, en particulier de 0,05 à 0,5 % en poids, par rapport au poids de la matière de base à mouler réfractaire ;
g) le mélange à mouler contient en outre au moins un composé contenant du phosphore, de préférence de 0,05 à 1,0 % en poids, de manière particulièrement préférée de 0,1 à 0,5 % en poids, par rapport au poids de la matière à mouler réfractaire.

15. Procédé de fabrication de moules de coulée ou de noyaux comprenant :
- la préparation du mélange à mouler selon au moins l'une des revendications 1 à 14,
- l'introduction du mélange à mouler dans un moule, et
- le durcissement du mélange à mouler.

16. Procédé selon la revendication 15, dans lequel le mélange à mouler est introduit dans le moule au moyen d'une machine à tirer les noyaux à l'aide d'air comprimé et le moule est un outil de moulage et l'outil de moulage est parcouru par un ou plusieurs gaz, en particulier du CO₂ ou des gaz contenant du CO₂.

17. Procédé selon la revendication 15 ou 16, dans lequel le mélange à mouler est exposé pour durcir à une température d'au moins 100°C, de préférence pendant moins de 5 min.

18. Moule ou noyau pouvant être fabriqué selon au moins l'une des revendications 15 à 17.

19. Utilisation du mélange à mouler selon au moins l'une des revendications 1 à 14 pour la coulée de métaux ferreux ou d'aluminium, contenant en outre de préférence des microsphères creuses, en particulier des microsphères creuses de silicate d'aluminium et/ou des microsphères creuses de borosilicate.

20. Système multicomposants pour la fabrication de moules ou de noyaux, comprenant au moins les composants (A) et (B) suivants, présents spatialement séparément les uns des autres :
(A) un composant d'additif pulvérulent comprenant au moins
- un oxyde métallique particulaire, ledit oxyde métallique particulaire comprenant ou se composant
- d'au moins un oxyde d'aluminium en phase alpha et/ou
- d'au moins un oxyde mixte d'aluminium/de silicium, à l'exception des oxydes mixtes d'aluminium/de silicium ayant une structure de silicate lamellaire,
- pas de verre soluble ; et
(B) un composant de liant liquide (B) comprenant au moins
- du verre soluble contenant de l'eau.

21. Système multicomposants selon la revendication 20, comprenant en outre (F) un composant réfractaire apte à l'écoulement (F) comprenant
- une matière de base à mouler réfractaire et
- pas de verre soluble.

22. Système multicomposants selon la revendication 20 ou 21, pour la fabrication du mélange à mouler selon l'une des revendications 1 à 15.
